# EUROPEAN PATENT SPECIFICATION

(11) **EP 2 626 259 B1**
(45) Date of publication and mention of the grant of the patent: **26.04.2017**
(21) Application number: 13154158.3
(22) Date of filing: 06.02.2013
(51) Int. Cl.: B60T 7/04, B60T 7/22, B60T 8/171, B60T 8/1755, B60T 8/1761, B60T 8/1763, B60T 8/26, B60T 8/28, B60T 8/32, B60T 17/22, B60W 10/08, B60W 10/18, B60W 10/192, B60W 30/18, B60W 20/00

(54) **Vehicle motion control apparatus, and vehicle motion control method**
Fahrzeugbewegungssteuervorrichtung und Fahrzeugbewegungsteuerverfahren
Appareil de contrôle des mouvements de véhicule et procédé de contrôle des mouvements de véhicule

(30) Priority: 09.02.2012 JP 2012026638
(43) Date of publication of application: 14.08.2013
(73) Proprietor: Hitachi Automotive Systems, Ltd., Hitachinaka-shi Ibaraki 312-8503 (JP)
(72) Inventor: Yokoyama, Atsushi c/o Hitachi, Ltd.,, Tokyo 100-8220 (JP); Ohsawa, Toshiya c/o Hitachi, Ltd.,, Tokyo 100-8280 (JP)
(74) Representative: MERH-IP Matias Erny Reichl Hoffmann Patentanwälte PartG mbB

(56) References cited:
- EP-A1- 1 876 077
- EP-A1- 2 127 974
- EP-A1- 2 172 378
- EP-A1- 2 236 376
- WO-A1-2006/000560
- DE-A1- 10 223 990
- DE-A1-102007 057 605
- DE-A1-102008 017 480
- FR-A1- 2 917 694
- US-A1- 2003 230 933
- US-A1- 2007 046 099
- US-A1- 2011 221 265

## Description

### BACKGROUND

### Technical Field

The present invention discussed herein relates to a vehicle motion control apparatus and a vehicle motion control method, such as an apparatus and method for controlling the motion of a vehicle in which driving force is generated by using an engine and an electric motor and in which braking force is generated by using a friction brake and the electric motor.

### Related Art

In a vehicle equipped with an electric motor, in order to implement efficient braking control of the vehicle, friction braking by which the vehicle is decelerated by converting the motion energy of the vehicle into thermal energy with a friction material fitted to a wheel is combined with regenerative braking by which the vehicle is decelerated by recovering the motion energy of the vehicle in the form of electric energy with the electric motor.

In the vehicle equipped with the electric motor, the amount of motion energy of the vehicle that is regenerated can be effectively increased by increasing the braking force generated by the electric motor to the extent that the travel stability of the vehicle at the time of braking is not adversely affected. Further, fuel consumption by the vehicle can be effectively contained by increasing the amount of driving force generated by the electric motor when the drive efficiency of the engine is low.

JP Patent Publication (Kokai) No. 2003-320929 A discloses a technology related to the braking control of a vehicle in which the front wheels are provided with an electric motor.

In the braking control apparatus according to JP Patent Publication (Kokai) No. 2003-320929 A, a control intervention threshold value for a slip ratio smaller than according to conventional anti-skid control is set. When the slip ratio is equal to or more than the control intervention threshold value, a target braking torque is allocated to a regenerative braking unit and a friction braking unit such that the ratio of allocation of braking torque to the friction braking unit is increased with decreasing braking torque that is being generated by the regenerative braking unit.

In the braking control apparatus disclosed in JP Patent Publication (Kokai) No. 2003-320929 A, even in a situation in which the rate of response of the wheel speed to regenerative braking is delayed because of the magnitude of inertial mass and the like, transition to friction braking can be made at a small slip ratio so that friction braking, which has a faster response speed, can be used. Thus, the overall response rate can be increased, and the speed of the wheel on which regenerative braking acts can be quickly returned to the vehicle body speed.

However, in the braking control apparatus according to JP Patent Publication (Kokai) No. 2003-320929 A, the decision regarding control intervention is made with reference to the slip ratio as an index. Thus, the decision response may be decreased depending on the friction state between the road surface and the wheel, such as when the friction coefficient between the road surface and the wheel is small. In order to improve responsiveness when the friction coefficient between the road surface and the wheel is low, the control intervention threshold value for the slip ratio may be minimally set. However, when the control intervention threshold value for the slip ratio is set smaller, the slip ratio may easily exceed the control intervention threshold value even when there is a wheel grip margin (the degree of adhesion between road surface and tire) in a situation in which the friction coefficient between the road surface and the wheel is high. As a result, the amount of regeneration by the regenerative braking unit may be suppressed more than is necessary.

Regarding the above problem, JP Patent Publication (Kokai) No. 2001-287635 A discloses a technology to control the posture of the vehicle by allocating the braking force to the front/rear wheels in accordance with the friction coefficient between the road surface and the wheels (hereafter referred to as "road surface µ").

The braking force allocation control apparatus according to JP Patent Publication (Kokai) No. 2001-287635 A computes a target braking force for each wheel such that road surface µ gradient values (the road surface µ with respect to wheel slip) of the respective wheels are substantially the same, or such that the road surface µ gradient value for the rear wheels is greater than the road surface µ gradient value for the front wheels.

JP Patent Publication (Kokai) No. 2010-228690 A discloses a technology for controlling the motion of a vehicle by using the value of a change in braking force with respect to a change in the slip ratio of the respective wheels as an index similar to the road surface µ gradient value.

The vehicle motion control apparatus disclosed in JP Patent Publication (Kokai) No. 2010-228690 A controls the motion of the vehicle by controlling the braking/driving torque that acts on the wheels by setting a longitudinal acceleration maximum value on the basis of the value of a change in braking force with respect to a change in the slip ratio.

EP 2 236 376 A1 relates to a vehicle dynamics control device having a control unit executing braking/driving torque control for controlling at least either a braking torque or a driving torque at each wheel based upon either external information pertaining to an environment of a vehicle or vehicle information that includes operation input information indicating an operation input by a driver and a vehicle dynamics information.

FR 2 917 694 A1 relates to a regenerative braking control method for a hybrid vehicle, wherein the vehicle is provided with an electric machine coupled to the rear wheels of the vehicle by a coupling mechanism and which includes a controller for powering and/or electrically charging an associated battery.

DE 102 23 990 A1 relates to a brake force control apparatus for a vehicle directed to an anti-slip control, wherein the regenerative braking force and the regular braking force are both increased or decreased when an anti-slip control is started.

DE 10 2007 057605 A1 relates to the determination of a driving condition of a vehicle, wherein a control value based on a driving condition is determined which gives a measure for the assignment of braking force between the front and the rear axle of the vehicle.

### SUMMARY

According to the braking force allocation control apparatus disclosed in JP Patent Publication (Kokai) No. 2001-287635 A, slipping of the wheels due to excessive braking force allocation can be prevented through the allocation of braking force for the front/rear wheels in accordance with the road surface µ gradient, so that the maximum braking force corresponding to the road surface µ can be generated. Thus, vehicle braking force control can be implemented in view of not just the load of the wheels but also the road surface µ.

According to the vehicle motion control apparatus disclosed in JP Patent Publication (Kokai) No. 2010-228690 A, by limiting the braking/driving torque acting on the wheels on the basis of the value of the change in braking force with respect to the change in the slip ratio, turning performance corresponding to the road surface µ can be ensured. Thus, an automatic acceleration/deceleration setting can be implemented while drivability is ensured even when the road surface friction is varied.

However, in the braking force allocation control apparatus according to JP Patent Publication (Kokai) No. 2001-287635 A, no control is exerted to greatly change the balance of the road surface µ gradient for the front wheels and rear wheels, or to increase the driving force or braking force for the front wheels or rear wheels by an electric motor. Further, no control for adjusting the driving force allocation for the front wheels and rear wheels depending on the road surface µ gradient value is disclosed.

Also in the vehicle motion control apparatus according to JP Patent Publication (Kokai) No. 2010-228690 A, there is no disclosure of the implementation of control for increasing the amount of regenerative braking by greatly changing the allocation of braking/driving torque for the front wheels and rear wheels, or control for adjusting the allocation of driving force or braking force for the front wheels and rear wheels of the vehicle.

Further, none of JP Patent Publication (Kokai) No. 2003-320929 A, JP Patent Publication (Kokai) No. 2001-287635 A, and JP Patent Publication (Kokai) No. 2010-228690 A discloses the technology for adapting to the rate of change in braking force. Thus, there is the problem in the relevant field of how to devise a technology such that both an increase in braking/driving force by an electric motor and the insurance of vehicle travel stability can be achieved under various situations which may range from gradual braking to rapid braking.

In view of the foregoing, an object of the present invention is to provide a vehicle motion control apparatus and a vehicle motion control method such that the travel stability of a vehicle can be maintained by appropriately controlling the regenerative braking force and electric driving force of an electric motor in accordance with the wheel slip state or the friction coefficient between the road surface and the wheel, and such that the regenerative braking force or electric driving force of the electric motor can be effectively increased under various situations which may range from gradual braking to rapid braking, or from gradual starting to rapid starting.

### Solution to the Problem

According to an embodiment, a vehicle motion control apparatus for controlling the motion of a vehicle provided with a brake apparatus configured to generate braking force in at least one of a front wheel and a rear wheel; a drive source configured to generate driving force in at least one of the front wheel and the rear wheel; and/or an electric motor configured to generate regenerative braking force and electric driving force in the front wheel or the rear wheel includes a braking/driving force allocation unit configured to allocate braking/driving force to the front wheel and the rear wheel on the basis of braking/driving force required for the vehicle. The braking/driving force allocation unit decreases the braking/driving force for one of the front wheel and the rear wheel for which the braking/driving force is generated by the electric motor in response to a decrease in the ratio of braking/driving force to a slip ratio of at least one of the front wheel and the rear wheel.

According to another embodiment, a vehicle motion control method for controlling the motion of a vehicle provided with a brake apparatus configured to generate braking force in at least one of a front wheel and a rear wheel; a drive source configured to generate driving force in at least one of the front wheel and the rear wheel; and/or an electric motor configured to generate regenerative braking force and electric driving force in the front wheel or the rear wheel includes allocating braking/driving force to the front wheel and the rear wheel on the basis of braking/driving force required for the vehicle; and/or decreasing the braking/driving force for one of the front wheel and the rear wheel for which the braking/driving force is generated by the electric motor in response to a decrease in the ratio of braking/driving force to a slip ratio of at least one of the front wheel and the rear wheel.

### Effects of the Invention

According to the vehicle motion control apparatus and the vehicle motion control method, the approaching of wheel grip to saturation can be detected with a relatively small amount of slip, so that the travel stability of the vehicle at the time of regenerative braking can be efficiently increased. Further, the regenerative braking force or electric driving force by the electric motor can be appropriately suppressed in accordance with the wheel slip state, whereby the travel stability of the vehicle can be maintained and the braking/driving force by the electric motor can be effectively increased under various situations, ranging from gradual braking to rapid braking or from gradual starting to rapid starting, for example.

Other objects, features and effects of the present invention will become more apparent from the following detailed description when read in conjunction with the accompanying drawings.

### BRIEF DESCRIPTION OF DRAWINGS

FIG. 1 is an overall diagram illustrating a basic configuration of a vehicle to which a vehicle motion control apparatus according to an embodiment is applied;
FIG. 2 is a schematic diagram schematically illustrating an internal configuration of the vehicle motion control apparatus illustrated in FIG. 1;
FIG. 3 illustrates the relationship between slip ratio and braking force for different road surface friction coefficients, illustrating braking stiffness threshold values;
FIG. 4 illustrates the relationship between slip ratio and braking force for different road surface friction coefficients, illustrating slip ratio threshold values;
FIG. 5 illustrates the relationship between target front wheel braking force and target rear wheel braking force in a front/rear braking force allocation unit illustrated in FIG. 2, depicting front/rear braking force allocation lines used for front/rear allocation of braking force;
FIG. 6 illustrates the relationship between target front wheel braking force and target rear wheel braking force in the front/rear braking force allocation unit illustrated in FIG. 2, depicting front/rear braking force allocation lines used for front/rear allocation of braking force when regeneration capacity is decreased;
FIG. 7 illustrates a front/rear braking force allocation method by the front/rear braking force allocation unit illustrated in FIG. 2;
FIG. 8 illustrates the relationship between target front wheel braking force and target rear wheel braking force in the front/rear braking force allocation unit illustrated in FIG. 2, depicting front/rear braking force allocation lines used for front/rear allocation of braking force when a correction gain for the braking stiffness is changed;
FIG. 9 illustrates the relationship between target front wheel braking force and target rear wheel braking force in the front/rear braking force allocation unit illustrated in FIG. 2, depicting front/rear braking force allocation lines used for front/rear allocation of braking force when a correction gain for the chronological rate of change in required total braking force is changed;
FIG. 10 illustrates chronological changes in braking force, slip ratio, and braking stiffness in the front/rear braking force allocation unit illustrated in FIG. 2 in the case of a low-µ road;
FIG. 11 illustrates chronological changes in braking force, slip ratio, and braking stiffness in the front/rear braking force allocation unit illustrated in FIG. 2 in the case of a high-µ road;
FIG. 12 illustrates chronological changes in braking force, slip ratio, and braking stiffness in the front/rear braking force allocation unit illustrated in FIG. 2 in the case of a low-µ road;
FIG. 13 schematically illustrates the braking force for each wheel when the vehicle is making a turn; and
FIG. 14 illustrates chronological changes in braking force and braking stiffness in the front/rear braking force allocation unit illustrated in FIG. 2 when the vehicle is making a turn.

### DETAILED DESCRIPTION

In the following, a vehicle motion control apparatus and a vehicle motion control method according to an embodiment will be described with reference to the drawings.

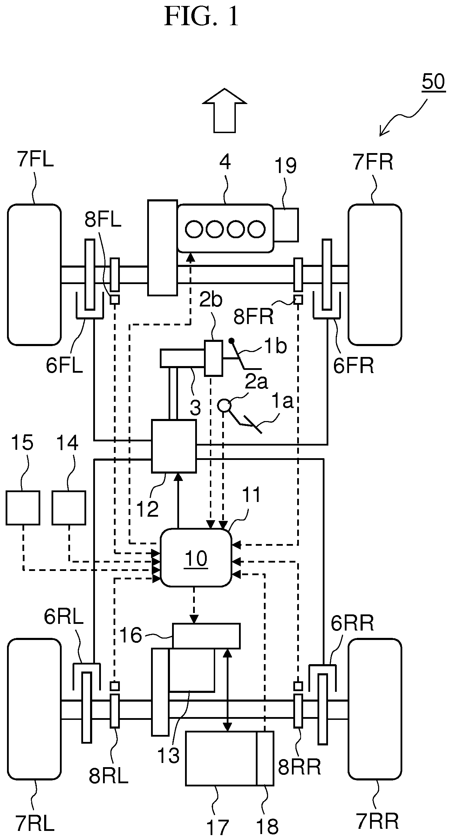

FIG. 1 illustrates a basic configuration of a vehicle 50 to which a vehicle motion control apparatus 10 according to the present embodiment is applied.

The vehicle 50 is provided with left and right front wheels 7FL and 7FR and left and right rear wheels 7RL and 7RR at the front and rear, respectively, of the vehicle 50.

To the front wheels 7FL and 7FR of the vehicle 50, an engine (drive source) 4 is mechanically coupled. The engine 4 produces driving force for propelling the vehicle 50 in the front wheels 7FL and 7FR.

To the rear wheels 7RL and 7RR of the vehicle 50, an electric motor 13 is mechanically coupled. The electric motor 13 produces braking/driving force for the vehicle 50 in the rear wheels 7RL and 7RR. The braking/driving force may include at least one of braking force and driving force. For example, the braking/driving force includes only braking force, only driving force, or both braking force and driving force.

The engine 4 coupled to the front wheels 7FL and 7FR of the vehicle 50 is provided with a small-sized motor 19. Although the small-sized motor 19 is capable of generating braking force in the front wheels 7FL and 7FR via the engine 4 at the time of generating electricity, the generated braking force is relatively small compared with the braking force generated by the electric motor 13 coupled to the rear wheels 7RL and 7RR. Further, while the small-sized motor 19 is capable of generating driving force for starting the engine 4 or propelling the vehicle 50, the generated driving force is relatively small compared with the driving force generated by the electric motor 13. Thus, according to the present embodiment, the electric motor that is mainly used for generating the braking/driving force for the vehicle is the electric motor 13 coupled to the rear wheels 7RL and 7RR.

The electric motor 13 coupled to the rear wheels 7RL and 7RR of the vehicle 50 is connected to an inverter 16. The inverter 16 controls the electric power supplied to the electric motor 13. The inverter 16 is electrically connected to a battery 17 that supplies electric power to the electric motor 13 via the inverter 16. Braking torque generated by the electric motor 13 is stored in the battery 17 in the form of regenerative energy. The battery 17 is provided with a battery controller 18 that monitors the remaining level of electric power stored in the battery 17 or the regenerative energy accepting capacity thereof, for example. The battery controller 18 transmits such information to the controller 11.

The vehicle 50 is also provided with an accelerator pedal 1a and a brake pedal 1b operated by a driver. The pedals 1a and 1b are fitted with an accelerator pedal operation amount detector 2a and a brake operation amount detector 2b, respectively, for detecting the amounts of corresponding operation by the driver. The operation amount detectors 2a and 2b are electrically connected to the controller 11 such that the operation amounts of the pedals 1a and 1b by the driver can be transmitted to the controller 11. To the brake pedal 1b, a hydraulic master cylinder 3 for converting a corresponding operating force into a pressure is connected.

The controller 11 is supplied not only with the above information but also information from a vehicle state detector 14, an external information detector 15, and wheel speed sensors 8FL, 8FR, 8RL, and 8RR, for example. The vehicle state detector 14 may include various sensors for detecting the operation state of the vehicle, such as a longitudinal direction acceleration sensor, a lateral direction acceleration sensor, a yaw rate sensor, a steering angle sensor, and a friction brake pressure sensor. The external information detector 15 may include various detectors for detecting the environment or situations surrounding the vehicle, such as a radar, a camera, an ultrasound sensor, a wireless receiver, and a GPS.

The controller 11 controls the braking/driving force of the electric motor 13 by transmitting a target braking/driving force to the inverter 16 on the basis of the input information, and also controls the driving force of the engine 4 by transmitting a target driving force to the engine 4. The vehicle 50 is provided with a friction brake control apparatus 12 connected to the master cylinder 3 and to friction brakes 6FL, 6FR, 6RL, and 6RR fitted to the respective wheels. The controller 11 electrically transmits a target braking force to the friction brake control apparatus 12 so as to electronically control the pressure in the friction brakes 6FL, 6FR, 6RL, and 6RR fitted to the respective wheels. The pressure in the friction brakes 6FL, 6FR, 6RL, and 6RR may be mechanically converted into braking force for the respective wheels 7FL, 7FR, 7RL, and 7RR by a conventional mechanism.

Thus, the driving force by the engine 4 and the braking force by the friction brakes 6FL and 6FR act on the front wheels 7FL and 7FR of the vehicle 50, while the braking/driving force by the electric motor 13 (regenerative braking force and electric driving force) and the braking force by the friction brakes 6RL and 6RR act on the rear wheels 7RL and 7RR. The controller 11 includes a vehicle motion control apparatus 10. The vehicle motion control apparatus 10 controls the motion of the vehicle by appropriately allocating the braking/driving forces generated in the respective wheels by the engine 4 as a drive source, the friction brakes 6FL, 6FR, 6RL, and 6RR as brake apparatuses, and the electric motor 13.

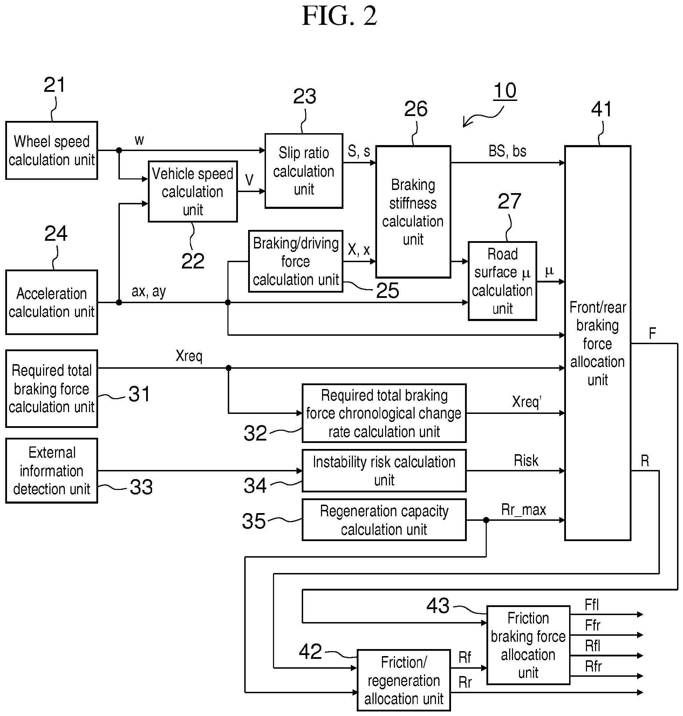

FIG. 2 schematically illustrates an internal configuration of the vehicle motion control apparatus 10 illustrated in FIG. 1.

The vehicle motion control apparatus 10 is mainly provided with a wheel speed calculation unit 21, an acceleration calculation unit 24, a required total braking force calculation unit 31, an external information detection unit 33, and a regeneration capacity calculation unit 35.

The wheel speed calculation unit 21 calculates the wheel speed (rotation speed) w of each wheel on the basis of the signals outputted from the wheel speed sensors 8FL, 8FR, 8RL, and 8RR, and transmits the calculation result to a vehicle speed calculation unit 22 and a slip ratio calculation unit 23. The vehicle speed calculation unit 22 calculates a speed V of the vehicle 50 on the basis of the wheel speed w of each wheel and the information inputted from the acceleration calculation unit 24, and transmits the calculation result to the slip ratio calculation unit 23.

For example, when the vehicle 50 is decelerating, the vehicle speed calculation unit 22 adopts the maximum wheel speed among the wheel speeds w of the respective wheels as the vehicle speed V. Meanwhile, when the wheel speeds w of all of the wheels are rapidly changed, for example, the vehicle speed calculation unit 22 determines that the correlation between the wheel speeds w and the vehicle speed V is small, and newly calculates the vehicle speed V by correcting the vehicle speed V on the basis of longitudinal acceleration ax from the acceleration calculation unit 24 that is detected by the vehicle state detector 14.

The slip ratio calculation unit 23 calculates a slip ratio s for each wheel and a vehicle-average slip ratio S on the basis of the wheel speed w transmitted from the wheel speed calculation unit 21 and the vehicle speed V transmitted from the vehicle speed calculation unit 22, and transmits the calculation results to a braking stiffness calculation unit 26.

The acceleration calculation unit 24 calculates the longitudinal acceleration ax and lateral acceleration ay of the vehicle 50 on the basis of an acceleration sensor value from the vehicle state detector 14, and transmits the calculation results to the vehicle speed calculation unit 22, a braking/driving force calculation unit 25, a road surface µ calculation unit 27, and a front/rear braking force allocation unit 41. The braking/driving force calculation unit 25 calculates a braking/driving force X for the vehicle 50 as a whole on the basis of the longitudinal acceleration ax of the vehicle 50 transmitted from the acceleration calculation unit 24 and a vehicle weight stored in advance. The braking/driving force calculation unit 25 then calculates a braking/driving force x for each wheel by allocating the braking/driving force X for the vehicle 50 as a whole to the respective wheels, and transmits the calculation results to the braking stiffness calculation unit 26.

The braking stiffness calculation unit 26 calculates braking stiffness BS and bs on the basis of the relationship between the vehicle-average slip ratio S and the slip ratio s of each wheel that are transmitted from the slip ratio calculation unit 23 and the braking/driving force X of the vehicle as a whole and the braking/driving force x of each wheel that are transmitted from the braking/driving force calculation unit 25, and transmits the calculation results to the road surface µ calculation unit 27 and the front/rear braking force allocation unit 41. The braking stiffness BS indicates the ratio of the braking force X of the vehicle as a whole to the vehicle-average slip ratio S. The braking stiffness bs indicates the ratio of the braking force x of each wheel to the slip ratio s of the corresponding wheel.

The road surface µ calculation unit 27 calculates a road surface friction coefficient µ on the basis of the braking stiffness BS and bs transmitted from the braking stiffness calculation unit 26 and the longitudinal acceleration ax transmitted from the acceleration calculation unit 24, and transmits the calculation result to the front/rear braking force allocation unit 41.

Thus, the front/rear braking force allocation unit 41 is supplied with the braking stiffness BS and bs, the road surface friction coefficient µ, the longitudinal acceleration ax, and the lateral acceleration ay, which are based on the information inputted to the wheel speed calculation unit 21 and the acceleration calculation unit 24.

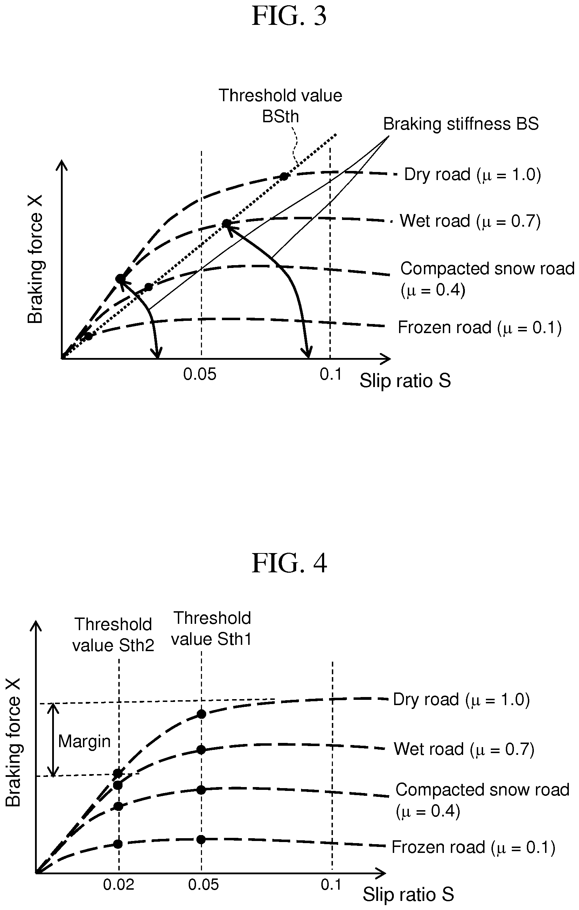

With reference to FIG. 3, concrete methods for calculating the braking stiffness BS and bs in the braking stiffness calculation unit 26 and the road surface friction coefficient µ in the road surface µ calculation unit 27 will be described. FIG. 3 illustrates the relationship between the slip ratio and the braking force of the vehicle 50 at different road surface friction coefficients, in which the horizontal axis shows the slip ratio and the vertical axis shows the braking force.

As described above, the braking stiffness BS, for example, which is the ratio of the braking force X of the vehicle as a whole to the vehicle-average slip ratio S, can be expressed by the slope of the straight line connecting an operating point and the origin in FIG. 3. Namely, the vehicle-average braking stiffness BS can be calculated by dividing the braking/driving force X of the vehicle as a whole by a total value s_mass of the slip ratio of each wheel, while the braking stiffness bs for each wheel can be calculated by dividing the braking/driving force x of each wheel by the slip ratio s of the corresponding wheel. The braking stiffness of the two front wheels and the two rear wheels may be calculated similarly.

As illustrated in FIG. 3, the characteristics of the braking force X with respect to the slip ratio S vary depending on the friction state of the road surface. However, in a region with small slip ratios, i.e., in a region in which the braking force is small, the braking stiffness BS is substantially constant even when the road surface friction coefficient µ is changed. The braking stiffness BS is gradually decreased as the braking force approaches the friction limit of the road surface and the braking force begins to be saturated.

Thus, the road surface µ calculation unit 27 sets a threshold value BSth for the braking stiffness BS in advance. When the braking stiffness BS is smaller than the threshold value BSth, the road surface µ calculation unit 27 adopts the longitudinal acceleration ax of the vehicle 50 transmitted from the acceleration calculation unit 24 as the road surface friction coefficient µ.

As illustrated in FIG. 3, the slip ratio S such that the braking stiffness BS is smaller than the threshold value BSth may differ between a low-µ road with the road surface friction coefficient µ on the order of 0.1, such as a frozen road, and a high-µ road with the road surface friction coefficient µ on the order of 1.0, such as a dry road. The braking stiffness BS may begin to decrease at a relatively small slip ratio for the low-µ road such as the frozen road, or at a relatively large slip ratio for the high-µ road such as the dry road. Because the beginning of decrease in the braking stiffness BS indicates the beginning of saturation of wheel grip, the road surface friction coefficient µ can be detected at a small slip ratio for the low-µ road or at a large slip ratio for the high-µ road by the above method.

As illustrated in FIG. 4, the low-µ road may be discriminated by setting a threshold value Sth for the slip ratio S. In this method, when the threshold value Sth is set such that Sth1 = 0.05, for example, the longitudinal acceleration ax of the vehicle 50 near the road surface friction limit may be adopted as the road surface friction coefficient µ in a range from the low-µ road, such as frozen road, to the high-µ road such as dry road. However, the slip ratio for the low-µ road may overshoot such that the peak value of the road surface friction coefficient µ may become excessive, such as around 0.1. Namely, while the accuracy of estimation of the road surface friction coefficient µ may be ensured, the travel stability of the vehicle 50 may become insufficient. When the threshold value Sth is set to be relatively small at Sth2 = 0.02, for example, the longitudinal acceleration ax of the vehicle 50 near the road surface friction limit can be adopted as the road surface friction coefficient µ while the slip ratio is maintained at a small level on the low-µ road such as frozen road. However, on the high-µ road such as dry road, the longitudinal acceleration ax at the time may possibly be adopted as the road surface friction coefficient µ even when there is still margin before the road surface friction limit. Namely, while the travel stability of the vehicle 50 may be ensured, the estimation accuracy for the road surface friction coefficient µ on the high-µ road may be decreased such that it may become impossible to perform sufficient regeneration.

Thus, as illustrated in FIG. 3, by performing the estimation of the road surface friction coefficient µ on the basis of the decrease in braking stiffness, compared with the estimation of the road surface friction coefficient µ by using the slip ratio as the threshold value, for example, the road surface friction coefficient µ can be detected at a small slip ratio on the low-µ road or at a large slip ratio on the high-µ road. Thus, the estimation accuracy for the road surface friction coefficient µ can be ensured while travel stability for the low-µ road is ensured.

The required total braking force calculation unit 31 illustrated in FIG. 2 caluculates a braking force target value required for the vehicle as a whole. Specifically, the required total braking force calculation unit 31 calculates a required total braking force Xreq on the basis of the operation amounts of the accelerator pedal 1a or the brake pedal 1b by the driver, information from the vehicle state detector 14 and the external information detector 15 and the like. For example, when the driver has operated the brake pedal 1b or when collision with a vehicle travelling ahead or an obstacle is to be avoided, the required total braking force calculation unit 31 calculates the required total braking force Xreq for decelerating the vehicle 50, and transmits the calculation result to the front/rear braking force allocation unit 41 and the required total braking force chronological change rate calculation unit 32.

The required total braking force chronological change rate calculation unit 32 calculates a chronological rate of change Xreq' by differentiating the required total braking force Xreq transmitted from the required total braking force calculation unit 31 with respect to time, and transmits the calculation result to the front/rear braking force allocation unit 41. When the chronological rate of change Xreq' of the required total braking force is large, this may indicate a rapid braking travel state. It may be considered that such a state should be maintained for a predetermined time even when the chronological rate of change is decreased. Thus, filtering may be performed to hold the peak value of the chronological rate of change for a predetermined time, or filtering using a low-pass filter may be performed only in a decreasing direction such that the peak value of the chronological rate of change is progressively decreased.

The external information detection unit 33 detects the environment or a situation surrounding the vehicle. For example, the external information detection unit 33 detects another vehicle, a pedestrian, an obstacle, a dividing line, the road shoulder, or outside temperature by using a radar, a camera, an ultrasound sensor, a temperature sensor and the like, and transmits the detection result to an instability risk calculation unit 34. The external information detection unit 33 may also receive information about a road situation, a fallen object situation, an accident situation, a congestion situation, a road freezing situation and the like with regard to the position or course of the vehicle, by using a wireless receiver or a GPS, and transmit the information to the instability risk calculation unit 34.

The instability risk calculation unit 34 calculates an index Risk related to the magnitude of instability risk for the vehicle 50 on the basis of the information from the external information detection unit 33 or the vehicle state detector 14, and transmits the calculation result to the front/rear braking force allocation unit 41.

When the relative distance from the other vehicle, pedestrian, obstacle and the like is small, for example, such that the relative speed therewith is high, the frequency of operations by the driver, such as rapid braking or rapid steering, may be increased, which may be considered to indicate high instability risk. When the relative distance from the dividing line or the road shoulder is short, for example, operations such as rapid braking or rapid steering may be increased so as to avoid deviation from the travelling road, which may be considered to indicate high instability risk. Further, when the vehicle is travelling, or expected to travel, on a road with a high road gradient, such as a slope, it may be considered that the instability risk is high because the rear wheel friction limit may be decreased. Further, when the outside temperature is low, for example, the instability risk may be considered to be high because the frequency of travel on the low-µ road such as a frozen road may be increased. Further, upon reception of information indicating the presence of a fallen object or an accident on the road ahead by a wireless receiver and the like, the instability risk may be considered to be high because the probability of a driving operation for avoiding an accident in the future is increased.

The regeneration capacity calculation unit 35 calculates a maximum regenerative braking force Rr_max that can be generated in the vehicle 50 on the basis of regeneration capacity information transmitted from the inverter 16 or the battery controller 18, and transmits the calculation result to the front/rear braking force allocation unit 41 and the friction/regeneration allocation unit 42. The maximum regenerative braking force Rr_max tends to be dependent on the vehicle speed V because of electrical constraints of the electric motor 13 and the inverter 16. Thus, the maximum regenerative braking force Rr_max may be calculated by using map data regarding the vehicle speed V. In this case, the maximum regenerative braking force Rr_max may be corrected in accordance with a change in voltage or electric power accepting capacity of the battery 17.

The front/rear braking force allocation unit 41 calculates a front wheel braking force F and a rear wheel braking force R on the basis of the various kinds of information described above, and transmits the front wheel braking force F and the rear wheel braking force R to the friction braking force allocation unit 43 and the friction/regeneration allocation unit 42, respectively.

The friction/regeneration allocation unit 42 calculates a target friction braking force Rf and a target regenerative braking force Rr on the basis of the maximum regenerative braking force Rr_max transmitted from the regeneration capacity calculation unit 35 and the rear wheel braking force R transmitted from the front/rear braking force allocation unit 41. The friction/regeneration allocation unit 42 transmits the target friction braking force Rf to the friction braking force allocation unit 43. The target regenerative braking force Rr is transmitted to the inverter 16 so that the vehicle 50 can be decelerated by using regenerative braking force of the electric motor 13.

The friction braking force allocation unit 43 calculates friction brake braking forces Ffl, Ffr, Rfl, and Rfr for the respective wheels on the basis of the front wheel braking force F transmitted from the front/rear braking force allocation unit 41 and the target friction braking force Rf transmitted from the friction/regeneration allocation unit 42, and transmits the calculation results to the friction brake control apparatus 12 so as to decelerate the vehicle 50 by controlling the pressure in the friction brakes 6FL, 6FR, 6RL, and 6RR fitted to the respective wheels.

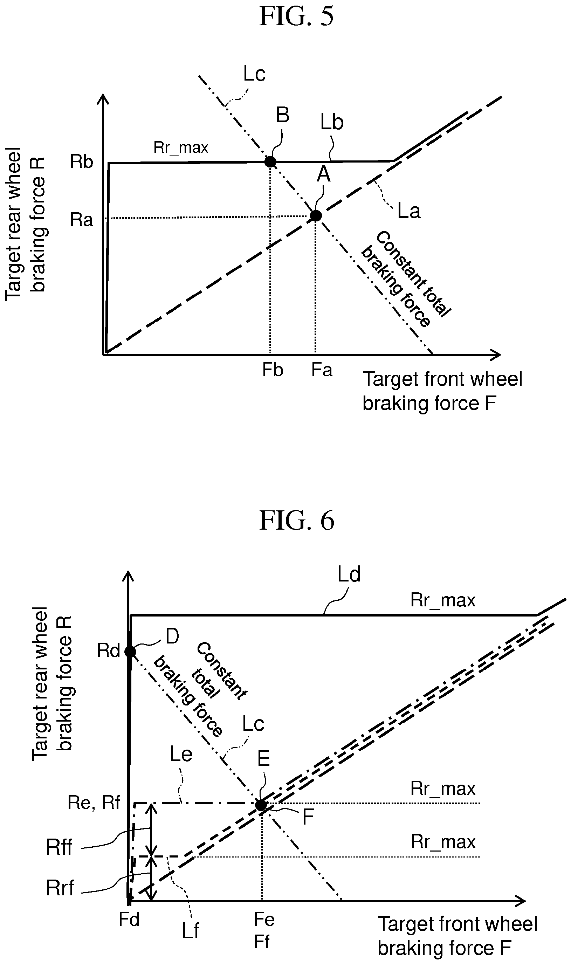

With reference to FIGS. 5 and 6, methods for calculating the front wheel braking force F and the rear wheel braking force R in the front/rear braking force allocation unit 41, the target friction braking force Rf and the target regenerative braking force Rr in the friction/regeneration allocation unit 42, and the friction brake braking forces Ffl, Ffr, Rfl, and Rfr for the respective wheels in the friction braking force allocation unit 43 will be described. FIG. 5 illustrates the relationship between the target front wheel braking force and the target rear wheel braking force in the front/rear braking force allocation unit 41 illustrated in FIG. 2, depicting front/rear braking force allocation lines used for front/rear allocation of braking force. FIG. 6 illustrates front/rear braking force allocation lines used for front/rear allocation of braking force when regeneration capacity is decreased.

As illustrated in FIG. 5, the front/rear braking force allocation unit 41 is provided with the front/rear braking force allocation lines (lines of transition of the braking force for the front wheels and rear wheels in a coordinate system with the horizontal axis showing the front wheel braking force F and the vertical axis showing the rear wheel braking force R) for setting the amounts of allocation of front wheel braking force and rear wheel braking force in accordance with the required total braking force Xreq calculated by the required total braking force calculation unit 31. The front/rear braking force allocation unit 41 varies the front/rear braking force allocation lines in accordance with the required total braking force Xreq transmitted from the required total braking force calculation unit 31 and regeneration capacity information such as the maximum regenerative braking force Rr_max transmitted from the regeneration capacity calculation unit 35, for example.

Specifically, when the electric motor 13 and the battery 17 has no regeneration capacity, for example, there is no need to set the rear wheel braking force to be relatively larger than the front wheel braking force. Thus, the braking forces for the front wheels 7FL and 7FR and the rear wheels 7RL and 7RR are allocated in accordance with a front/rear braking force allocation line for constant allocation (line La in FIG. 5) such that the front wheel braking force is relatively larger than the rear wheel braking force. By setting the front wheel braking force to be relatively larger than the rear wheel braking force, an increase in the slip ratio of the rear wheels 7RL and 7RR can be suppressed, so that the travel stability of the vehicle 50 can be maintained.

More specifically, when the required total braking force Xreq is constant, a line for the constant total braking force can be drawn as a line Lc in FIG. 5. When the electric motor 13 and the battery 17 has no regeneration capacity as mentioned above, the target front wheel braking force Fa and the target rear wheel braking force Ra can be calculated from the intersection point A of the line La and the line Lc. In this case, the target front wheel braking force Fa is relatively larger than the target rear wheel braking force Ra as described above. Thus, the braking force and slip ratio for the front wheels 7FL and 7FR are set to be relatively larger than the braking force and slip ratio for the rear wheels 7RL and 7RR, so that the travel stability of the vehicle 50 can be ensured.

The target rear wheel braking force R calculated by the front/rear braking force allocation unit 41 is allocated to the target friction braking force Rf and the target regenerative braking force Rr by the friction/regeneration allocation unit 42 illustrated in FIG. 2. However, when no regeneration capacity can be expected from the electric motor 13 and the battery 17 and the braking forces for the front wheels 7FL and 7FR and the rear wheels 7RL and 7RR are allocated in accordance with the front/rear braking force allocation line for constant allocation, such as the line La in FIG. 5, the target rear wheel braking force R is entirely allocated to the target friction braking force Rf by friction brake.

Meanwhile, when the electric motor 13 or the battery 17 has regeneration capacity, for example, it is preferable to set the rear wheel braking force to be as large as possible. Thus, a front/rear braking force allocation line is defined as indicated by a line Lb in FIG. 5 such that the target rear wheel braking force R can be set at the maximum regenerative braking force Rr_max, and the braking forces for the front wheels 7FL and 7FR and the rear wheels 7RL and 7RR are allocated in accordance with the front/rear braking force allocation line. When the required total braking force Xreq is constant, for example, the line for the constant total braking force can be drawn as the line Lc in FIG. 5. Thus, the target front wheel braking force Fb and the target rear wheel braking force Rb can be calculated from the intersection point B of the line Lb and the line Lc. When the target front wheel braking force F or the target rear wheel braking force R is relatively large, the braking forces for the front wheels 7FL and 7FR and the rear wheels 7RL and 7RR are allocated in accordance with the front/rear braking force allocation line for constant allocation such that the front wheel braking force is relatively larger than the rear wheel braking force. Accordingly, for example, the target rear wheel braking force Rb when the electric motor 13 or the battery 17 has regeneration capacity is set to be relatively larger than the target rear wheel braking force Ra when the electric motor 13 and the battery 17 has no regeneration capacity.

While the target rear wheel braking force Rb is allocated to the target friction braking force Rf and the target regenerative braking force Rr by the friction/regeneration allocation unit 42 illustrated in FIG. 2, the target rear wheel braking force Rb is generally set to be equal to the maximum regenerative braking force Rr_max. Thus, the target rear wheel braking force Rb is entirely allocated to the target regenerative braking force Rr, so that more energy can be regenerated via the electric motor 13 in accordance with the regeneration capacity.

With reference to FIG. 6, a change in front/rear allocation of braking force in the case in which the regeneration capacity is gradually decreased under the condition that the required total braking force Xreq is constant will be described. First, when the regeneration capacity is relatively large, the front/rear braking force allocation line is defined as indicated by a line Ld, whereby the target front wheel braking force Fd and the target rear wheel braking force Rd can be calculated from the intersection point D with the line for constant total braking force (line Lc). In the illustrated example, the required total braking force Xreq is entirely generated by regenerative braking of the rear wheels 7RL and 7RR. Namely, the target front wheel braking force Fd is substantially zero, and the target rear wheel braking force Rd is substantially equal to the required total braking force Xreq.

When the regeneration capacity is decreased slightly, the front/rear braking force allocation line is defined as indicated by a line Le, whereby the target front wheel braking force Fe and the target rear wheel braking force Re can be calculated from the intersection point E with the line for constant total braking force (line Lc). In this case, while the regeneration capacity may be relatively lowered, all of the braking force for the rear wheels 7RL and 7RR can be generated by the regenerative braking force for a predetermined time. When the target front wheel braking force F or the target rear wheel braking force R is relatively large, the braking force allocation to the front wheels and the rear wheels is along the front/rear braking force allocation line for constant allocation.

The target rear wheel braking force Re calculated by the front/rear braking force allocation unit 41 is allocated to the target friction braking force Rf and the target regenerative braking force Rr by the friction/regeneration allocation unit 42. However, the target rear wheel braking force Re is entirely allocated to the target regenerative braking force Rr for the predetermined time.

When the regeneration capacity is further decreased, the front/rear braking force allocation line is defined as indicated by a line Lf, whereby the target front wheel braking force Ff and the target rear wheel braking force Rf can be calculated. In this case, the target front wheel braking force F or the target rear wheel braking force R transitions to the front/rear braking force allocation line for constant allocation relatively earlier than the line Le, and the intersection point F with the line for constant total braking force (line Lc) is the same as the point E. Thus, the target front wheel braking force Ff and the target rear wheel braking force Rf have the same values as the target front wheel braking force Fe and the target rear wheel braking force Re, respectively.

While it may be preferable to set the regenerative braking force to be as large as possible, the target rear wheel braking force Rf in this case is relatively larger than the maximum regenerative braking force Rr_max. Thus, in the allocation of the target friction braking force Rf and the target regenerative braking force Rr by the friction/regeneration allocation unit 42, a target regenerative braking force Rrf is set at the maximum regenerative braking force Rr_max and a target friction braking force Rff is set for the lack with respect to the target rear wheel braking force Rf.

Thus, even when the regeneration capacity is varied, the amount of regenerative energy that is recovered by regenerative braking can be effectively increased by appropriately allocating the braking force for the front wheels and rear wheels in accordance with the regeneration capacity and complementing the lack of regenerative braking by friction braking, for example.

The target front wheel braking force F and the target friction braking force Rf that have been calculated by the above method are transmitted to the friction braking force allocation unit 43 for allocation to friction brake braking forces Ffl, Ffr, Rfl, and Rfr for the respective wheels, and the allocated results are transmitted to the friction brake control apparatus 12.

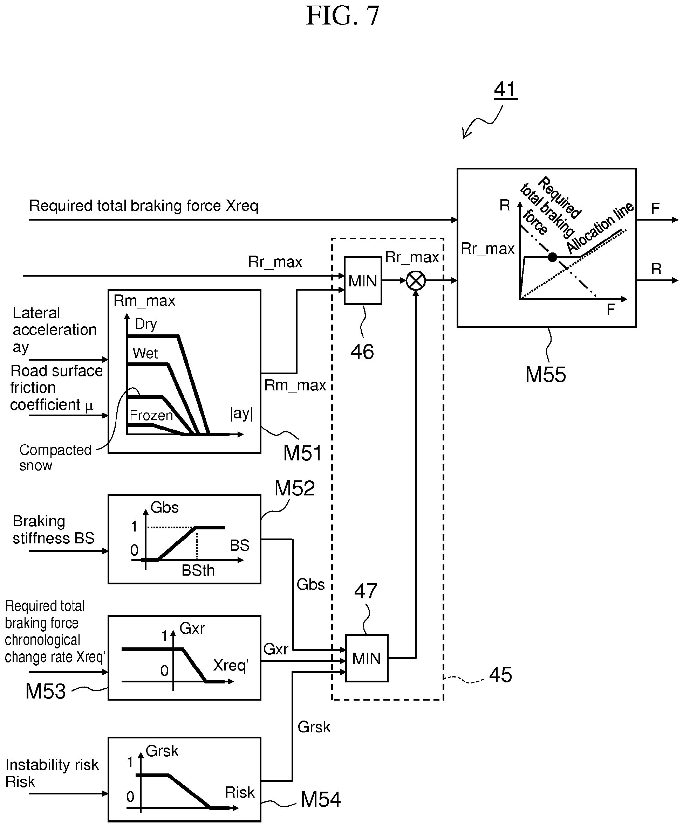

FIG. 7 illustrates the method for allocating the braking force for the front wheels and rear wheels by the front/rear braking force allocation unit 41 illustrated in FIG. 2 in greater detail.

The front/rear braking force allocation unit 41 is provided with a control map M51 that defines the relationship between the lateral acceleration ay and the maximum rear wheel braking force Rm_max; a control map M52 that defines the relationship between the braking stiffness BS and a correction gain Gbs; a control map M53 that defines the relationship between the chronological rate of change of required total braking force Xreq' and a correction gain Gxr; a control map M54 that defines the relationship between the instability risk index Risk and a correction gain Grsk; and a control map M55 that defines the relationship between the target front wheel braking force F and the target rear wheel braking force R.

First, the front/rear braking force allocation unit 41 calculates the maximum rear wheel braking force Rm_max in accordance with the lateral acceleration ay and the road surface friction coefficient µ by using the lateral acceleration ay transmitted from the acceleration calculation unit 24, the road surface friction coefficient µ transmitted from the road surface µ calculation unit, and the control map M51. The front/rear braking force allocation unit 41 then transmits the calculation result to the correction calculation unit 45 for the maximum regenerative braking force Rr_max.

Specifically, when the vehicle 50 is making a turn, for example, the absolute value of the lateral acceleration ay is increased and the lateral force generated in the front wheels 7FL and 7FR and the rear wheels 7RL and 7RR are also increased. In this state, when a relatively large braking force is generated in the rear wheels 7RL and 7RR, the lateral force in the rear wheels 7RL and 7RR is decreased. As a result, the balance of lateral force between the front wheels 7FL and 7FR and the rear wheels 7RL and 7RR may deteriorate such that the travel stability of the vehicle 50 may be decreased. Thus, the front/rear braking force allocation unit 41 sets the maximum rear wheel braking force Rm_max such that, as illustrated in the control map M51, the maximum rear wheel braking force Rm_max is decreased as the absolute value of the lateral acceleration ay of the vehicle 50 is increased. Further, the lateral force and the braking force that could be generated in the rear wheels 7RL and 7RR are decreased as the road surface friction coefficient µ is decreased. Thus, the front/rear braking force allocation unit 41 sets the maximum rear wheel braking force Rm_max such that the maximum rear wheel braking force Rm_max is decreased as the road surface friction coefficient µ is decreased.

The front/rear braking force allocation unit 41 also calculates the correction gain Gbs (0 ≤ Gbs ≤ 1) for decreasing the maximum regenerative braking force Rr_max in accordance with the braking stiffness BS by using the braking stiffness BS transmitted from the braking stiffness calculation unit and the control map M52, and transmits the calculation result to the correction calculation unit 45 for the maximum regenerative braking force Rr_max.

Specifically, because the grip of the rear wheels 7RL and 7RR is decreased as the braking stiffness BS is decreased (see FIG. 3), the front/rear braking force allocation unit 41 sets the correction gain Gbs to be less than one when the braking stiffness BS is less than a threshold value BSth. In this way, the maximum regenerative braking force Rr_max can be decreased, so that the slip of the rear wheels 7RL and 7RR can be suppressed. When the braking stiffness BS is decreased even more, the correction gain Gbs is set to zero at a predetermined value of the braking stiffness BS, and the front/rear braking force allocation line for constant allocation illustrated in FIG. 5, for example, is set.

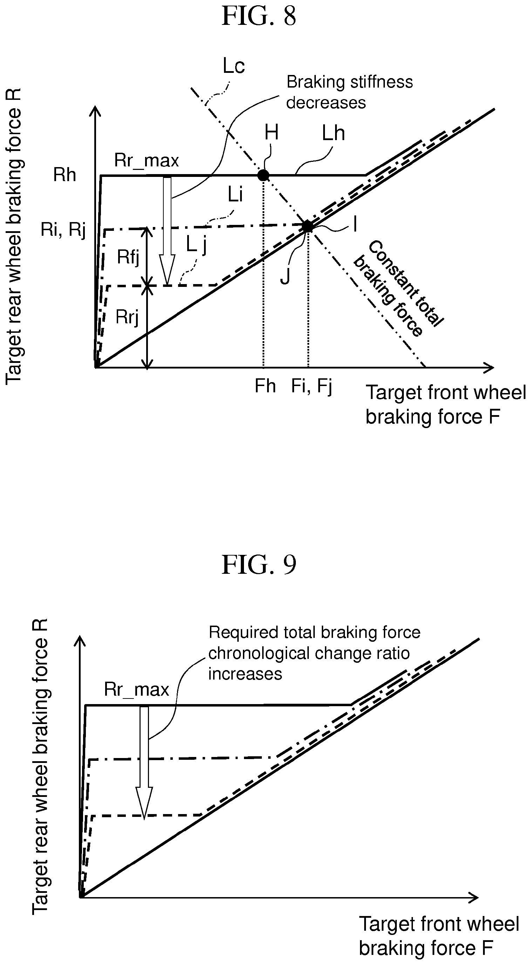

With reference to FIG. 8, changing of the front/rear braking force allocation lines in the case in which the maximum regenerative braking force Rr_max is decreased by the correction gain Gbs will be described in greater detail.

When the braking stiffness BS is relatively large; more specifically, when the braking stiffness BS is greater than the threshold value BSth such that the slip of the rear wheels 7RL and 7RR is small, the front/rear braking force allocation line is defined as indicated by a line Lh, and a target front wheel braking force Fh and a target rear wheel braking force Rh are calculated from the intersection point H with the line for constant total braking force (line Lc). In this case, the target rear wheel braking force Rh is set to be relatively larger than the target front wheel braking force Fh, and the braking forces for the front wheels 7FL and 7FR and the rear wheels 7RL and 7RR are allocated such that more regenerative braking can be ensured.

When the braking stiffness BS is slightly decreased; more specifically, when the braking stiffness BS is smaller than the threshold value BSth and the slip of the rear wheels 7RL and 7RR is increased, the front/rear braking force allocation line is defined as indicated by a line Li, and a target front wheel braking force Fi and a target rear wheel braking force Ri are calculated from the intersection point I with the line for constant total braking force (line Lc). In this case, the correction gain Gbs is set to be less than one and the maximum regenerative braking force Rr_max is slightly decreased, so that the target rear wheel braking force Ri is also decreased, as illustrated. In the illustrated example, the target front wheel braking force Fi is set to be relatively larger than the target rear wheel braking force Ri, so that the travel stability of the vehicle 50 can be increased.

When the braking stiffness BS is even more decreased; more specifically, when the braking stiffness BS is even smaller such that the slip of the rear wheels 7RL and 7RR is even greater, the maximum regenerative braking force Rr_max is decreased by bringing the correction gain Gbs to even closer to zero, and a target front wheel braking force Fj and a target rear wheel braking force Rj are calculated by defining the front/rear braking force allocation line as indicated by a line Lj, for example. In this case, as described with reference to FIG. 6, the target front wheel braking force Fj and the target rear wheel braking force Rj have the same values as the target front wheel braking force Fi and the target rear wheel braking force Ri, respectively. Thus, the target rear wheel braking force Rj is allocated to a target friction braking force Rfj and a target regenerative braking force Rrj by the friction/regeneration allocation unit 42.

While it is preferable to generate the rear wheel braking force by using regenerative braking to the extent that travel stability can be ensured, the slip of the rear wheels 7RL and 7RR may not be controllable with sufficient responsiveness only by regenerative braking because the moment of inertia of the electric motor 13 coupled to the rear wheels 7RL and 7RR is large. Thus, the slip of the wheels of the vehicle 50 can be effectively suppressed by increasing the amount of braking force allocated to friction braking on the basis of an index such as the braking stiffness BS and smoothly transitioning to slip control by friction braking.

Thus, in the vehicle motion control apparatus 10 that controls the motion of the vehicle 50 by allocating the braking/driving force generated by the electric motor 13 and the friction brake apparatus 12 to the front wheels 7FL and 7FR and the rear wheels 7RL and 7RR, when the ratio of braking/driving force to slip ratio is decreased, the braking/driving force for the rear wheels 7RL and 7RR, for which braking/driving force is generated by the electric motor 13, is decreased. In this way, the amount of regenerative braking or electric driving by the electric motor 13 can be appropriately controlled in accordance with the slip state of the wheels, so that the amount of regeneration and driving force generated by the electric motor 13 can be effectively increased while the travel stability of the vehicle 50 is maintained.

As illustrated in FIG. 7, the front/rear braking force allocation unit 41 calculates the correction gain Gxr (0 ≤ Gxr ≤ 1) for decreasing the maximum regenerative braking force Rr_max in accordance with the chronological rate of change of required total braking force Xreq' by using the chronological rate of change of required total braking force Xreq' transmitted from the required total braking force chronological change rate calculation unit 32 and the control map M53, and then transmits the calculation result to the correction calculation unit 45 for the maximum regenerative braking force Rr_max.

For example, once the slip ratio of a wheel starts to increase, the slip ratio may keep increasing due to the moment of inertia of the electric motor 13 or the wheel and the like even when the braking force is decreased so as to suppress the slip ratio. Further, calculation by the braking stiffness calculation unit 26 or the road surface µ calculation unit 27, for example, may include calculation with a time delay for low-pass filtering, which poses a constraint to the slip control response time. Thus, when the chronological rate of change of required total braking force Xreq' is increased, the slip ratio of the rear wheels 7RL and 7RR may be sharply increased, resulting in a greater tendency for the grip of the rear wheels 7RL and 7RR to be decreased.

Thus, the front/rear braking force allocation unit 41 sets the correction gain Gxr such that the maximum regenerative braking force Rr_max can be decreased as the chronological rate of change of required total braking force Xreq' is increased, so as to suppress the slip of the rear wheels 7RL and 7RR.

With reference to FIG. 9, changing of the front/rear braking force allocation lines in the case in which the maximum regenerative braking force Rr_max is decreased by the correction gain Gxr will be described.

As described with reference to FIG. 8, when the chronological rate of change of required total braking force Xreq' is larger than a predetermined threshold value, the front/rear braking force allocation unit 41 sets the correction gain Gxr to be less than one and corrects the maximum regenerative braking force Rr_max by using the correction gain Gxr, thus relatively decreasing the maximum regenerative braking force Rr_max. In this way, the braking force for the rear wheels 7RL and 7RR is relatively decreased, so that the increase in the slip ratio of the rear wheels 7RL and 7RR due to the increase in braking force can be effectively suppressed.

Thus, when the chronological rate of change calculated by the required total braking force chronological change rate calculation unit 32, which calculates the chronological rate of change in the braking/driving force required by the driver or a separate control apparatus, is increased, the braking force for the rear wheels 7RL and 7RR, for which braking/driving force is generated by the electric motor 13, is decreased. In this way, the regenerative braking force by the electric motor 13 can be effectively increased while the travel stability of the vehicle 50 is maintained in a wide range from gradual braking to rapid braking.

The front/rear braking force allocation unit 41 calculates the correction gain Grsk (0 ≤ Grsk ≤ 1) for decreasing the maximum regenerative braking force in accordance with the instability risk index Risk by using the instability risk index Risk transmitted from the instability risk calculation unit 34 and the control map 54, and then transmits the calculation result to the correction calculation unit 45 for the maximum regenerative braking force Rr_max.

For example, when braking force with a large chronological rate of change is required, such as in the case of rapid braking, or when travel on a road with a low road surface friction coefficient is expected, the instability risk of the vehicle 50 is increased. In view of such a situation, the front/rear braking force allocation unit 41 sets the correction gain Grsk such that the maximum regenerative braking force Rr_max is decreased as the instability risk is increased. In this way, the travel stability of the vehicle 50 can be maintained while a grip margin for the rear wheels 7RL and 7RR is ensured in advance. Thus, the travel stability of the vehicle 50 can be ensured more reliably than the case in which the braking force for the rear wheels 7RL and 7RR is controlled when the wheel slip state is approaching a limit.

The correction calculation unit 45 compares in the calculation unit 46 the maximum regenerative braking force Rr_max based on the regeneration capacity transmitted from the regeneration capacity calculation unit 35 with the maximum rear wheel braking force Rm_max calculated by using the lateral acceleration ay, the road surface friction coefficient µ, and the control map M51, and adopts the smaller one of the two as a new maximum regenerative braking force Rr_max. Thus, even when the regeneration capacity is large, for example, the rear wheel braking force is limited by determining the wheel grip limit in accordance with the turning state of the vehicle 50 or the road surface friction coefficient µ. In this way, the travel stability of the vehicle 50 can be effectively increased compared with the case in which the braking force for the rear wheels 7RL and 7RR is controlled when the wheel slip state is approaching a limit, for example.

The correction calculation unit 45 also compares in the calculation unit 47 the decreasing correction gains Gbs, Gxr, and Grsk and adopts the smallest correction gain as the correction gain for the maximum regenerative braking force Rr_max.

The correction calculation unit 45 then calculates a new maximum regenerative braking force Rr_max by multiplying the maximum regenerative braking force Rr_max adopted by the calculation unit 46 with the correction gain adopted by the calculation unit 47.

The correction calculation unit 45 calculates the target front wheel braking force F and the target rear wheel braking force R by using the required total braking force Xreq transmitted from the required total braking force calculation unit 31, the new maximum regenerative braking force Rr_max, and the control map M55, as described with reference to FIG. 5, for example, and transmits the calculation results to the friction/regeneration allocation unit 42 and the friction braking force allocation unit 43.

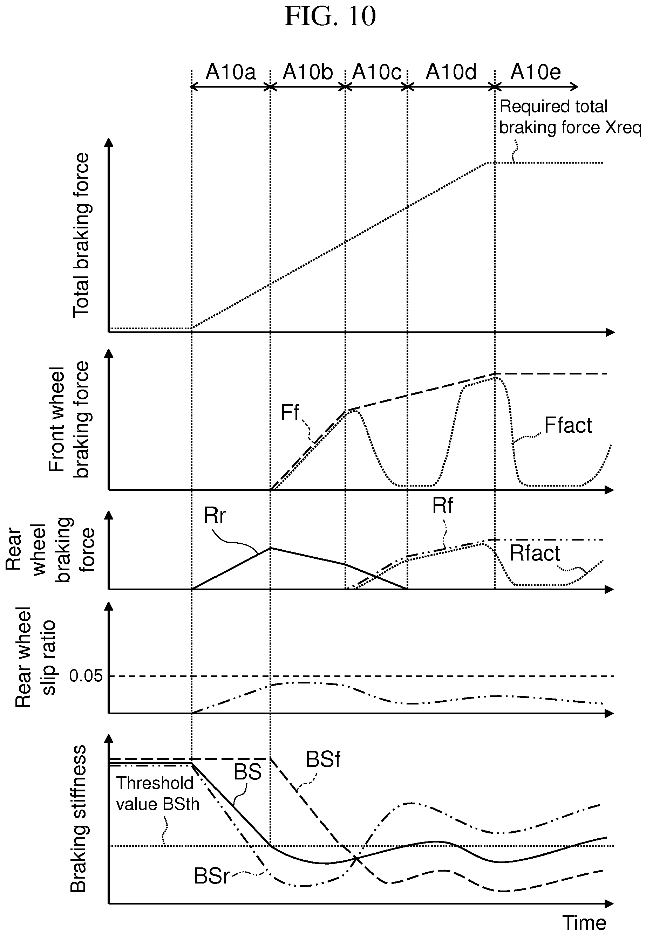

With reference to FIGS. 10 to 12, the changes in braking force, slip ratio, and braking stiffness in the case in which the road surface friction coefficient varies in the front/rear braking force allocation unit 41 of FIG. 2 will be described.

FIG. 10 illustrates the chronological changes in braking force, slip ratio, and braking stiffness when the required total braking force Xreq is increased in a ramped (inclined) manner and relatively gradually on a low-µ road with the road surface friction coefficient µ on the order of 0.1. Specifically, FIG. 10 illustrates the changes in, from the top, total braking force, front wheel braking force, rear wheel braking force, rear wheel slip ratio, and braking stiffness.

In an initial period of braking (section A10a), the braking force for the front wheels 7FL and 7FR and the rear wheels 7RL and 7RR is allocated only to the rear wheels 7RL and 7RR, as described with reference to the line Ld in FIG. 6. Thus, in the rise start period of the required total braking force Xreq, no braking force for the front wheels 7FL and 7FR is generated and only the regenerative braking force Rr for the rear wheels 7RL and 7RR is generated. As the braking force for the rear wheels 7RL and 7RR is increased, the vehicle-average braking stiffness BS and the braking stiffness BSr for the rear wheels 7RL and 7RR begin to be decreased.

When the vehicle-average braking stiffness BS becomes smaller than the threshold value BSth (section A10b), the front/rear braking force allocation unit 41 determines that the wheel slip has increased. Thus, the front/rear braking force allocation unit 41 decreases the amount of allocation of regenerative braking to the rear wheels 7RL and 7RR and increases the amount of allocation of friction braking to the front wheels 7FL and 7FR. When the regenerative braking force Rr for the rear wheels 7RL and 7RR is decreased, the slip ratio of the rear wheels 7RL and 7RR also begins to be decreased, and the braking stiffness BSr for the rear wheels 7RL and 7RR begins to recover.

In the illustrated example, the rear wheel slip ratio is less than 0.05 when the suppression of the regenerative braking for the rear wheels 7RL and 7RR is started. By decreasing the amount of allocation of regenerative braking to the rear wheels 7RL and 7RR and increasing the amount of allocation of friction braking to the front wheels 7FL and 7FR as described above, the grip of the rear wheels 7RL and 7RR can be quickly recovered in a state in which the rear wheel slip ratio is maintained low at the start of suppression of regenerative braking. Thus, the travel stability of the vehicle 50 can be ensured.

Because the required total braking force Xreq keeps increasing, the target front wheel braking force and the target rear wheel braking force also keep increasing. Thus, in section A10c, the braking stiffness BSf for the front wheels 7FL and 7FR is decreased and transition to slip control using braking force control by friction brake is started. At this point, the average braking stiffness BS proceeds near the threshold value BSth in an oscillatory manner while the rear wheel braking transitions from regenerative braking to friction braking.

After the rear wheel braking has completely transitioned from regenerative braking to friction braking (sections A10d and A10e), both the front wheels 7FL and 7FR and the rear wheels 7RL and 7RR transition to slip control by only friction braking. Thus, as in conventional ABS (Antilock Braking System) control, the front wheel braking force and the rear wheel braking force are controlled such that the slip ratio of the front wheels 7FL and 7FR is relatively larger than the slip ratio of the rear wheels 7RL and 7RR.

Thus, braking is performed with only the rear wheels 7RL and 7RR, to which the electric motor 13 is connected, until the slip ratio is increased, so that more regenerative energy can be recovered. Upon detection of an excessive slip via an index such as the braking stiffness BS, regeneration by the rear wheels 7RL and 7RR is suppressed such that regenerative braking force corresponding to the road surface friction coefficient µ can be generated, whereby unstable behavior of the vehicle 50 can be suppressed and the travel stability of the vehicle 50 can be ensured. When such slip control is implemented, the discrepancy between the front wheel target friction braking force Ff and rear wheel target friction braking force Rf and actual front wheel braking force Ffact and rear wheel braking force Rfact may become large, and the waveforms of the actual braking forces Ffact and Rfact may proceed in an oscillatory manner.

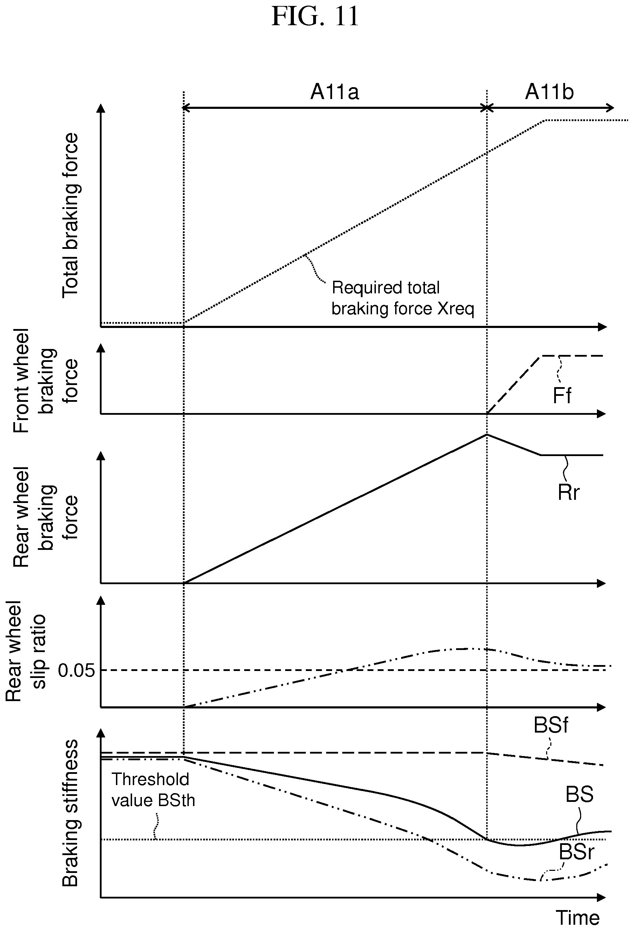

FIG. 11 illustrates the chronological changes in braking force, slip ratio, and braking stiffness when the required total braking force Xreq is increased in a ramped (inclined) manner and relatively gradually on a high-µ road with the road surface friction coefficient µ on the order of 1.0. Specifically, FIG. 11 illustrates the changes in, from the top, total braking force, front wheel braking force, rear wheel braking force, rear wheel slip ratio, and braking stiffness.

In an initial period of braking (section A11a), as described with reference to the line Ld in FIG. 6, the braking force for the front wheels 7FL and 7FR and the rear wheels 7RL and 7RR is allocated to only the rear wheels 7RL and 7RR. Thus, in the rise start period of the required total braking force Xreq, no braking force for the front wheels 7FL and 7FR is generated and only the regenerative braking force Rr for the rear wheels 7RL and 7RR is generated. As the braking force for the rear wheels 7RL and 7RR is increased, the vehicle-average braking stiffness BS or the braking stiffness BSr for the rear wheels 7RL and 7RR begin to be gradually decreased.

In the case of the high-µ road illustrated in FIG. 11, the grip performance of the rear wheels 7RL and 7RR is relatively high compared with the low-µ road illustrated in FIG. 10. Thus, even when the same braking force as for the low-µ road is generated, the rate of decrease in the braking stiffness BS and BSr is relatively small.

When the vehicle-average braking stiffness BS becomes smaller than the threshold value BSth (section A11b), the front/rear braking force allocation unit 41 determines that the wheel slip has increased. Thus, the front/rear braking force allocation unit 41 decreases the amount of allocation of regenerative braking to the rear wheels 7RL and 7RR and increases the amount of allocation of the friction braking for the front wheels 7FL and 7FR. When the regenerative braking force Rr for the rear wheels 7RL and 7RR is decreased, the slip ratio of the rear wheels 7RL and 7RR also begins to be decreased such that the braking stiffness BSr for the rear wheels 7RL and 7RR gradually begins to recover.

According to the present embodiment, the braking stiffness BS and BSr is used as slip control indexes. Thus, even when the rear wheel slip ratio is more than 0.05 at the start of suppression of the regenerative braking for the rear wheels 7RL and 7RR, regenerative braking can be maintained until a relatively large slip ratio compared with the case of a low-µ road when sufficient regeneration capacity can be ensured. Accordingly, the travel stability of the vehicle 50 can be ensured while regenerative braking force corresponding to the road surface friction coefficient µ is generated.

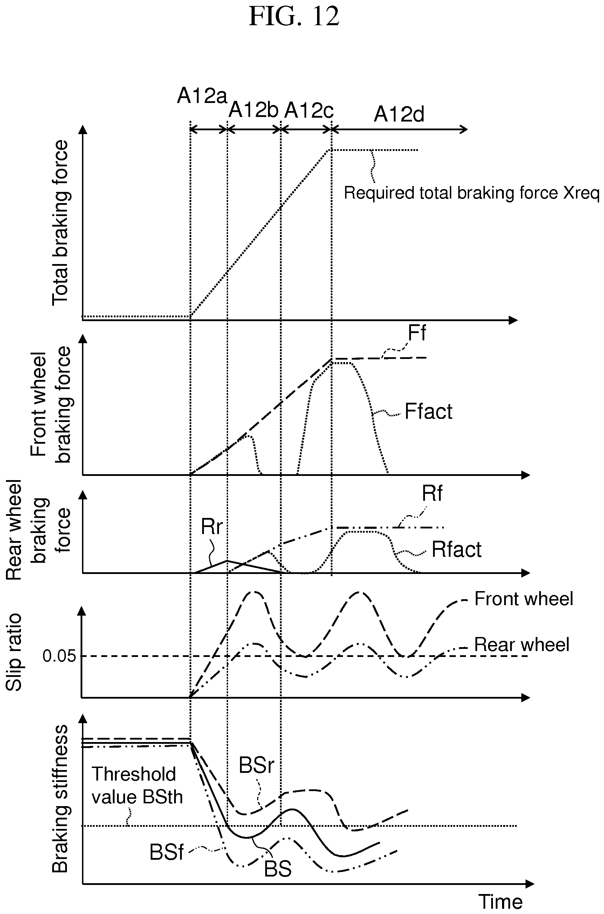

FIG. 12 illustrates the chronological changes in braking force, slip ratio, and braking stiffness when the required total braking force Xreq is increased in a ramped (inclined) manner and relatively sharply on a low-µ road with the road surface friction coefficient µ on the order of 0.1. Specifically, FIG. 12 illustrates the changes, from the top, in total braking force, front wheel braking force, rear wheel braking force, slip ratio, and braking stiffness.

In the rise start period (section A12a) of the required total braking force Xreq, the chronological rate of change of the required total braking force Xreq is large, so that, as described with reference to FIG. 9, the maximum regenerative braking force Rr_max is decreased for correction with a predetermined correction gain. Thus, the braking force allocation to the front wheels 7FL and 7FR and the rear wheels 7RL and 7RR is corrected to be in the vicinity of the front/rear braking force allocation line for constant allocation. Namely, the braking force for the front wheels 7FL and 7FR and the rear wheels 7RL and 7RR is allocated such that the front wheel braking force is relatively larger than the rear wheel braking force. Although the required total braking force Xreq keeps increasing, the rear wheel braking force is generated by regenerative braking force until the amount of allocation of braking force to the rear wheels 7RL and 7RR is greater than the maximum regenerative braking force Rr_max.

Thus, when the required total braking force Xreq is relatively sharply increased, the rear wheel braking force is limited and the front wheel braking force is increased compared with the case in which the required total braking force Xreq is relatively gradually increased. Accordingly, the slip ratio of the rear wheels 7RL and 7RR is increased compared with the case in which the required total braking force Xreq is relatively gradually increased. For example, even when the slip ratio of the rear wheels 7RL and 7RR is more than 0.05, the slip ratio of the front wheels 7FL and 7FR is relatively larger than the slip ratio of the rear wheels 7RL and 7RR, so that the unstable travel state of the vehicle 50 can be suppressed and travel stability can be ensured.

When the vehicle-average braking stiffness BS becomes smaller than the threshold value BSth (section A12b), the maximum regenerative braking force Rr_max is further decreased for correction, whereby the amount of allocation of regenerative braking to the rear wheels 7RL and 7RR is decreased while the amount of allocation of friction braking to the front wheels 7FL and 7FR is increased, and the rear wheel braking force gradually transitions to friction braking force.

After the rear wheel braking has completely transitioned from regenerative braking to friction braking (sections A12c and A12d), both the front wheels 7FL and 7FR and the rear wheels 7RL and 7RR transition to the slip control by only friction braking such that slip control by the friction brakes 6FL, 6FR, 6RL, and 6RR is implemented.

Thus, when the chronological rate of change of the required total braking force Xreq is large, the front wheel braking force is relatively increased from the initial braking period, whereby the slip ratio of the rear wheels 7RL and 7RR, to which the electric motor 13 is connected, can be suppressed from becoming excessive and the travel stability of the vehicle 50 can be ensured. Namely, in response to an increase in the chronological rate of change of the required total braking force Xreq, the braking force for the rear wheels 7RL and 7RR, for which braking/driving force is generated by the electric motor 13, is decreased, so that the travel stability of the vehicle 50 can be ensured.

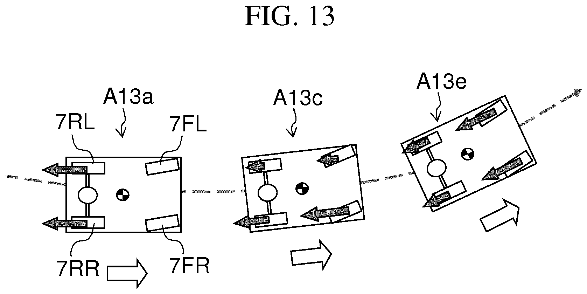

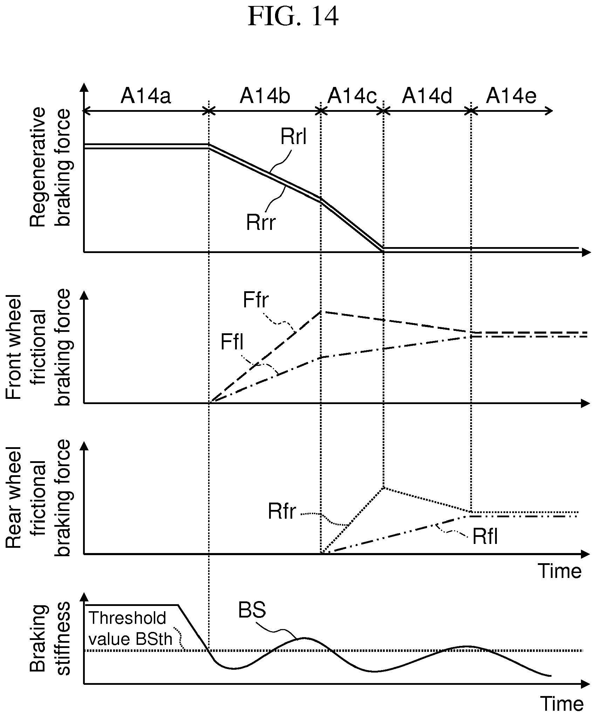

With reference to FIGS. 13 and 14, the changes in braking force and braking stiffness in the front/rear braking force allocation unit 41 illustrated in FIG. 2 when the vehicle makes a turn will be described.

FIG. 13 schematically illustrates braking force for the respective wheels during a turn of the vehicle. FIG. 14 illustrates the chronological changes in braking force and braking stiffness during a turn of the vehicle. Specifically, FIG. 14 illustrates the changes in, from the top, regenerative braking force, front wheel friction braking force, rear wheel friction braking force, and braking stiffness.

In a section A13a of FIG. 13 or a section A14a of FIG. 14, the motion of the vehicle 50 is controlled by using only regenerative braking for the rear wheels 7RL and 7RR when the vehicle 50 is making a left turn. Such braking control is implemented until the slip ratio of the rear wheels 7RL and 7RR is increased and the braking stiffness BS becomes smaller than the threshold value BSth.

When the vehicle-average braking stiffness BS becomes smaller than the threshold value BSth (section A14b of FIG. 14), the front/rear braking force allocation unit 41 decreases the amount of allocation of regenerative braking to the rear wheels 7RL and 7RR and increases the amount of allocation of friction braking to the front wheels 7FL and 7FR. At this point, it is possible that the slip ratio of the rear wheels 7RL and 7RR is increased such that the travel stability of the vehicle 50 is lowered. Thus, the friction braking force (friction brake braking force) Ffr for the right front wheel 7FR is set to be relatively greater than the friction braking force Ffl for the left front wheel 7FL.

In this way, a yaw moment such that the turn is suppressed by the left-right braking force difference can be produced in the vehicle 50. For example, when the travel stability of the vehicle 50 is sharply decreased by the slip of the rear wheels 7RL and 7RR, the travel stability of the vehicle 50 can be quickly recovered.

In a section A13c of FIG. 13 or a section A14c of FIG. 14, prior to complete transition of the rear wheel braking from regenerative braking to friction braking, the friction braking force Rfr for the right rear wheel 7RR is set to be relatively larger than the friction braking force Rfl for the left rear wheel 7RL, as in the case of the front wheels 7FL and 7FR.

In this way, a yaw moment such that the turn is suppressed by the left-right braking force difference can be produced in the vehicle 50. For example, when the travel stability of the vehicle 50 is sharply decreased by the slip of the rear wheels 7RL and 7RR, the travel stability of the vehicle 50 can be more quickly recovered.

In a section A14d of FIG. 14, the regenerative braking force is zero and the rear wheel braking has completely transitioned to friction braking, and the slip ratio of the front wheels 7FL and 7FR is greater than the slip ratio of the rear wheels 7RL and 7RR such that the vehicle 50 is stabilized. Thus, the left-right braking force difference of the front wheels 7FL and 7FR and the rear wheels 7RL and 7RR is decreased until the left and right braking forces are made substantially identical in a section A13e of FIG. 13 or a section A14e of FIG. 14.

Thus, upon detection of an excessive slip of the rear wheels 7RL and 7RR when the vehicle 50 is making a turn, the braking force for the wheel on the outside of the turn is relatively increased compared with the braking force for the wheel on the inside of the turn, during the transition of braking force from the rear wheels 7RL and 7RR to the front wheels 7FL and 7FR. In this way, the decrease in travel stability due to the slip of the rear wheels 7RL and 7RR can be effectively suppressed.

While the foregoing description with reference to FIGS. 3 to 14 has been directed to the vehicle motion control involving mainly the vehicle-average braking stiffness BS, similar vehicle motion control can be implemented by using the braking stiffness bs for the respective wheels.

The foregoing embodiment has been described mainly with reference to examples in which, in order to ensure greater regenerative braking force, the amount of allocation of rear wheel braking force is set to be relatively increased immediately after the start of braking of the vehicle. However, the front wheel braking force and the rear wheel braking force immediately after the start of braking may be allocated in accordance with the front/rear braking force allocation line for constant allocation such that the front wheel braking force is relatively larger than the rear wheel braking force. In this case, when the braking stiffness becomes greater than a threshold value after the start of braking, it may be determined that the travel stability of the vehicle is ensured, and then the amount of regenerative braking may be increased by allocating the rear wheel braking force to be greater. In this case, the front wheel braking force may be set to be relatively large immediately after the start of braking, and the rear wheel braking force may be increased in accordance with the braking stiffness, whereby the amount of regeneration of regenerative energy by the electric motor can be increased while the travel stability is reflected as needed.

While the foregoing embodiment has been directed to vehicle motion control using braking force in particular between braking force and driving force, similar vehicle motion control may be implemented by using driving force. In this case, instead of the braking stiffness as an index, driving stiffness indicating the ratio of driving force to the wheel slip ratio may be used as an index. Further, the drive source that may be applied in accordance with the present embodiment may include not only an internal combustion engine but also an electric motor coupled to the front wheels or the rear wheels. For example, the drive source may be provided by using more of the driving force from the electric motor 13.

Further, while the foregoing embodiment has been directed to the motion control of the vehicle in which the electric motor is connected to the rear wheels, the electric motor may be connected to the front wheels. In the vehicle in which the electric motor is connected to the front wheels, understeer can be decreased when excessive regeneration is performed by the electric motor, so that the trajectory of the vehicle can be effectively suppressed from moving out when making a turn.

Further, while in the foregoing embodiment the controller 11 and the friction brake control apparatus 12 are separate units that are electrically connected, the function of the controller 11 may be included in the friction brake control apparatus 12, for example. When the function of the controller 11 is included in the friction brake control apparatus 12, communication delay or noise due to electrical connections can be suppressed, so that motion control responsiveness can be increased.

The present embodiment includes not only the rise gradient with the slip ratio near zero but also the range in which the slip ratio is relatively large and exhibits non-linear characteristics. According to the present embodiment, regarding the relationship between slip ratio and braking force, the braking stiffness obtained by dividing the braking force by the slip ratio is used as the index. However, an index other than the braking stiffness may be used as long as the index reflects a change in braking/driving force in response to a change in slip ratio. For example, a partial differentiation value of braking force in response to a change in slip ratio is used. Alternatively, instead of braking/driving force, a value obtained by dividing braking/driving force by wheel load may be used.

The foregoing detailed description has been presented for the purposes of illustration and description. Many modifications and variations are possible in light of the above teaching. It is not intended to be exhaustive or to limit the subject matter described herein to the precise form disclosed. For example, part of the configuration of one embodiment may be substituted by the configuration of another embodiment, or the configuration of one embodiment may be incorporated into the configuration of another embodiment. Further, with respect to part of the configuration of an embodiment, addition, deletion, or substitution may be made on the basis of another configuration.

The control lines or information lines illustrated are those considered necessary for description purposes and are not necessarily indicative of all of the control lines or information lines of a product. It may be considered that in practice almost all of the elements are interconnected.

### Reference Signs List

- 1a: Accelerator pedal
- 1b: Brake pedal
- 2a: Accelerator pedal operation amount detector
- 2b: Brake pedal operation amount detector
- 3: Master cylinder
- 4: Engine (drive source)
- 6FL, 6FR, 6RL, 6RR: Friction brake (brake apparatus)
- 7FL, 7FR: Front wheels
- 7RL, 7RR: Rear wheels
- 8FL, 8FR, 8RL, 8RR: Wheel speed sensor
- 10: Vehicle motion control apparatus
- 11: Controller
- 12: Friction brake control apparatus
- 13: Electric motor
- 14: Vehicle state detector
- 15: External information detector
- 16: Inverter
- 17: Battery
- 18: Battery controller
- 19: Small-sized motor
- 21: Wheel speed calculation unit
- 22: Vehicle speed calculation unit
- 23: Slip ratio calculation unit
- 24: Acceleration calculation unit
- 25: Braking/driving force calculation unit
- 26: Braking stiffness calculation unit
- 27: Road surface µ calculation unit
- 31: Required total braking force calculation unit
- 32: Required total braking force chronological change rate calculation unit
- 33: External information detection unit
- 34: Instability risk calculation unit
- 35: Regeneration capacity calculation unit
- 41: Front/rear braking force allocation unit
- 42: Friction/regeneration allocation unit
- 43: Friction braking force allocation unit
- 45: Correction calculation unit
- 50: Vehicle

## Claims

1. A vehicle motion control apparatus for controlling the motion of a vehicle (50) provided with a brake apparatus configured to generate braking force in at least one of a front wheel (7FL, 7FR) and a rear wheel (7RL, 7RR); a drive source configured to generate driving force in at least one of the front wheel (7FL, 7FR) and the rear wheel (7RL, 7RR); and an electric motor (13) configured to generate regenerative braking force and electric driving force in the front wheel or the rear wheel,
the vehicle motion control apparatus comprising:
a braking/driving force allocation unit configured to allocate braking/driving force to the front wheel (7FL, 7FR) and the rear wheel (7RL, 7RR) on the basis of braking/driving force required for the vehicle (50),
the braking/driving force allocation unit allocates a maximum regenerative braking force Rr_max being generatable by the electric motor (13) to the front wheels (7FL, 7FR) or the rear wheels (7RL, 7RR) when the total braking force Xreq required for the vehicle is larger or equal to the maximum regenerative braking force Rr_max; and
the braking/driving force allocation unit decreases the braking/driving force for the wheel for which the braking/driving force is generated by the electric motor (13) in response to a decrease in the ratio of braking/driving force to a slip ratio of at least one of the front wheel (7FL, 7FR) and the rear wheel (7RL, 7RR).

2. The vehicle motion control apparatus according to claim 1, wherein the braking/driving force allocation unit decreases the braking/driving force for the one of the front wheel and the rear wheel for which the braking/driving force is generated by the electric motor (13), in response to an increase in the chronological rate of change of the braking/driving force required for the vehicle (50) by a driver and/or a separate control apparatus.

3. The vehicle motion control apparatus according to claim 1 or 2, wherein the braking/driving force allocation unit decreases the braking/driving force for the one of the front wheel (7FL, 7FR) and the rear wheel (7RL, 7RR) for which the braking/driving force is generated by the electric motor (13), in response to an increase in the chronological rate of change in the amount of operation of a brake pedal (1b) or an accelerator pedal (1a) by the driver.

4. The vehicle motion control apparatus according to claim 1, wherein:
the electric motor (13) is connected to the rear wheel (7RL, 7RR); and
the braking/driving force allocation unit decreases the braking force for the rear wheel (7RL, 7RR) in response to a decrease in the ratio of braking force to the slip ratio of at least one of the front wheel (7FL, 7FR) and the rear wheel (7RL, 7RR).

5. The vehicle motion control apparatus according to claim 1, wherein the braking/driving force allocation unit decreases the braking/driving force for the one of the front wheel (7FL, 7FR) and the rear wheel (7RL, 7RR) for which the braking/driving force is generated by the electric motor (13), in response to an increase in acceleration of the vehicle or a predicted value of acceleration of the vehicle (50).

6. The vehicle motion control apparatus according to claim 1, wherein the braking/driving force allocation unit decreases the braking/driving force for the one of the front wheel (7FL, 7FR) and the rear wheel (7RL, 7RR) for which the braking/driving force is generated by the electric motor (13), upon determination that a current and/or future instability risk for the vehicle is high and/or will be high.

7. The vehicle motion control apparatus according to claim 6, wherein the braking/driving force allocation unit determines that the instability risk for the vehicle is high and/or will be high on the basis of information external to the vehicle (50).

8. The vehicle motion control apparatus according to claim 1, wherein the vehicle motion control apparatus makes the regenerative braking force generated by the electric motor (13) greater than the braking force generated by the brake apparatus when decreasing the braking/driving force for the one of the front wheel (7FL, 7FR) and the rear wheel (7RL, 7RR) for which the braking/driving force is generated by the electric motor (13).

9. The vehicle motion control apparatus according to claim 1, wherein, when the vehicle makes a turn, the vehicle motion control apparatus makes the braking force for a wheel on the outside of the turn greater than the braking force for a wheel on the inside of the turn when decreasing the braking/driving force for the one of the front wheel (7FL, 7FR) and the rear wheel (7RL, 7RR) for which the braking/driving force is generated by the electric motor (13).

10. The vehicle motion control apparatus according to claim 1, wherein the braking/driving force allocation unit decreases the braking/driving force generated by the electric motor (13) in response to a decrease in the ratio of acceleration of the vehicle (50) to the slip ratio of at least one of the front wheel (7FL, 7FR) and the rear wheel (7RL, 7RR) below a predetermined value.

11. The vehicle motion control apparatus according to claim 1, wherein the slip ratio is calculated on the basis of a wheel speed of each wheel of the vehicle (50) and the speed of the vehicle (50).

12. A vehicle motion control method for controlling the motion of a vehicle provided with a brake apparatus configured to generate braking force in at least one of a front wheel (7FL, 7FR) and a rear wheel (7RL, 7RR); a drive source configured to generate driving force in at least one of the front wheel (7FL, 7FR) and the rear wheel (7RL, 7RR); and an electric motor (13) configured to generate regenerative braking force and electric driving force in the front wheel (7FL, 7FR) or the rear wheel (7RL, 7RR),
the vehicle motion control method comprising:
allocating braking/driving force to the front wheel (7FL, 7FR) and the rear wheel (7RL, 7RR) on the basis of the braking/driving force required for the vehicle (50) allocating a maximum regenerative braking force Rr_max being generatable by the electric motor (13) to the front wheels (7FL, 7FR) or the rear wheels (7RL, 7RR) when the total braking force Xreq required for the vehicle is larger or equal to the maximum regenerative braking force Rr_max ; and
decreasing the braking/driving force for the wheel for which the braking/driving force is generated by the electric motor (13) in response to a decrease in the ratio of braking/driving force to a slip ratio of at least one of the front wheel (7FL, 7FR) and the rear wheel (7RL, 7RR).

13. The vehicle motion control method according to claim 12, further comprising decreasing the braking/driving force for the one of the front wheel (7FL, 7FR) and the rear wheel (7RL, 7RR) for which the braking/driving force is generated by the electric motor (13), in response to an increase in the chronological rate of change of the braking/driving force required for the vehicle by a driver and/or a separate control apparatus.

14. The vehicle motion control method according to claim 12, further comprising decreasing the braking/driving force for the one of the front wheel (7FL, 7FR) and the rear wheel (7RL, 7RR) for which the braking/driving force is generated by the electric motor (13), in response to an increase in the chronological rate of change in the amount of operation of a brake pedal (1b) or an accelerator pedal (1a) by the driver.

## Patentansprüche

1. Fahrzeugbewegungs-Steuervorrichtung zum Steuern der Bewegung eines Fahrzeugs (50), das mit einer Bremsvorrichtung, die konfiguriert ist, eine Bremskraft in einem Vorderrad (7FL, 7FR) und/oder einem Hinterrad (7RL, 7RR) zu erzeugen; einer Antriebsquelle, die konfiguriert ist, eine Antriebskraft in dem Vorderrad (7FL, 7FR) und/oder dem Hinterrad (7RL, 7RR) zu erzeugen; und einem Elektromotor (13), der konfiguriert ist, eine Rückgewinnungsbremskraft und eine elektrische Antriebskraft in dem Vorderrad oder dem Hinterrad zu erzeugen, versehen ist,
wobei die Fahrzeugbewegungs-Steuervorrichtung Folgendes umfasst:
eine Brems-/Antriebskraft-Zuweisungseinheit, die konfiguriert ist, auf der Grundlage einer für das Fahrzeug (50) erforderlichen Brems-/Antriebskraft dem Vorderrad (7FL, 7FR) und dem Hinterrad (7RL, 7RR) eine Brems-/Antriebskraft zuzuweisen,
wobei die Brems-/Antriebskraft-Zuweisungseinheit eine maximale Rückgewinnungsbremskraft Rr_max, die durch den Elektromotor (13) erzeugbar ist, den Vorderrädern (7FL, 7FR) oder den Hinterrädern (7RL, 7RR) zuweist, wenn die für das Fahrzeug erforderliche Gesamtbremskraft Xreq größer als die oder gleich der maximalen Rückgewinnungsbremskraft Rr_max ist; und
wobei die Brems-/Antriebskraft-Zuweisungseinheit die Brems-/Antriebskraft für das Rad, für das die Brems-/Antriebskraft durch den Elektromotor (13) erzeugt wird, in Reaktion auf eine Abnahme des Verhältnisses der Brems-/Antriebskraft zu einem Schlupfverhältnis des Vorderrads (7FL, 7FR) und/oder des Hinterrads (7RL, 7RR) verringert.

2. Fahrzeugbewegungs-Steuervorrichtung nach Anspruch 1, wobei die Brems-/Antriebskraft-Zuweisungseinheit die Brems-/Antriebskraft für das Vorrad und/oder das Hinterrad, für das die Brems-/Antriebskraft durch den Elektromotor (13) erzeugt wird, in Reaktion auf eine Erhöhung der chronologischen Änderungsrate der für das Fahrzeug (50) erforderlichen Brems-/Antriebskraft durch einen Fahrer und/oder eine separate Steuervorrichtung verringert.

3. Fahrzeugbewegungs-Steuervorrichtung nach Anspruch 1 oder 2, wobei die Brems-/Antriebskraft-Zuweisungseinheit die Brems-/Antriebskraft für das Vorderrad (7FL, 7FR) und/oder das Hinterrad (7RL, 7RR), für die die Brems-/Antriebskraft durch den Elektromotor (13) erzeugt wird, in Reaktion auf eine Erhöhung der chronologischen Änderungsrate des Betrags der Betätigung eines Bremspedals (1b) oder eines Fahrpedals (1a) durch den Fahrer verringert.

4. Fahrzeugbewegungs-Steuervorrichtung nach Anspruch 1, wobei:
der Elektromotor (13) mit dem Hinterrad (7RL, 7RR) verbunden ist; und
die Brems-/Antriebskraft-Zuweisungseinheit die Bremskraft für das Hinterrad (7RL, 7RR) in Reaktion auf eine Abnahme des Verhältnisses der Bremskraft zu dem Schlupfverhältnis des Vorderrads (7FL, 7FR) und/oder des Hinterrads (7RL, 7RR) verringert.

5. Fahrzeugbewegungs-Steuervorrichtung nach Anspruch 1, wobei die Brems-/Antriebskraft-Zuweisungseinheit die Brems-/Antriebskraft für das Vorderrad (7FL, 7FR) und/oder das Hinterrad (7RL, 7RR), für die die Brems-/Antriebskraft durch den Elektromotor (13) erzeugt wird, in Reaktion auf eine Zunahme der Beschleunigung des Fahrzeugs oder eines vorhergesagten Wertes der Beschleunigung des Fahrzeugs (50) verringert.

6. Fahrzeugbewegungs-Steuervorrichtung nach Anspruch 1 wobei die Brems-/Antriebskraft-Zuweisungseinheit die Brems-/Antriebskraft für das das Vorderrad (7FL, 7FR) und/oder das Hinterrad (7RL, 7RR), für die die Brems-/Antriebskraft durch den Elektromotor (13) erzeugt wird, bei der Bestimmung, dass ein aktuelles oder ein künftiges Instabilitätsrisiko für das Fahrzeug hoch ist und/oder hoch wird, verringert.

7. Fahrzeugbewegungs-Steuervorrichtung nach Anspruch 6, wobei die Brems-/Antriebskraft-Zuweisungseinheit auf der Grundlage von Informationen von außerhalb des Fahrzeugs (50) bestimmt, dass das Instabilitätsrisiko für das Fahrzeug hoch ist und/ oder hoch wird.

8. Fahrzeugbewegungs-Steuervorrichtung nach Anspruch 1, wobei die Fahrzeugbewegungs-Steuervorrichtung die durch den Elektromotor (13) erzeugte Rückgewinnungsbremskraft größer als die durch die Bremsvorrichtung erzeugte Bremskraft einstellt, wenn die Brems-/Antriebskraft für das Vorderrad (7FL, 7FR) und/oder das Hinterrad (7RL, 7RR), für das die Brems-/Antriebskraft durch den Elektromotor (13) erzeugt wird, verringert wird.

9. Fahrzeugbewegungs-Steuervorrichtung nach Anspruch 1, wobei dann, wenn das Fahrzeug eine Kurve fährt, die Fahrzeugbewegungs-Steuervorrichtung die Bremskraft für ein Rad auf der Außenseite der Kurve größer als die Bremskraft für ein Rad auf der Innenseite der Kurve einstellt, wenn die Brems-/Antriebskraft für das Vorderrad (7FL, 7FR) und/oder das Hinterrad (7RL, 7RR), für die die Brems-/Antriebskraft durch den Elektromotor (13) erzeugt wird, verringert wird.

10. Fahrzeugbewegungs-Steuervorrichtung nach Anspruch 1, wobei die Brems-/Antriebskraft-Zuweisungseinheit die durch den Elektromotor (13) erzeugte Brems-/Antriebskraft in Reaktion auf eine Abnahme des Verhältnisses der Beschleunigung des Fahrzeugs (50) zu dem Schlupfverhältnis des Vorderrads (7FL, 7FR) und/oder des Hinterrads (7RL, 7RR) unter einen vorgegebenen Wert verringert.

11. Fahrzeugbewegungs-Steuervorrichtung nach Anspruch 1, wobei das Schlupfverhältnis auf der Grundlage einer Raddrehzahl jedes Rades des Fahrzeugs (50) und der Geschwindigkeit des Fahrzeugs (50) berechnet wird.

12. Fahrzeugbewegungs-Steuerverfahren zum Steuern der Bewegung eines Fahrzeugs, das mit einer Bremsvorrichtung, die konfiguriert ist, eine Bremskraft in einem Vorderrad (7FL, 7FR) und/oder einem Hinterrad (7RL, 7RR) zu erzeugen; einer Antriebsquelle, die konfiguriert ist, eine Antriebskraft in dem Vorderrad (7FL, 7FR) und/oder dem Hinterrad (7RL, 7RR) zu erzeugen; und einem Elektromotor (13), der konfiguriert ist, eine Rückgewinnungsbremskraft und eine elektrische Antriebskraft in dem Vorderrad (7FL, 7FR) oder dem Hinterrad (7RL, 7RR) zu erzeugen, versehen ist,
wobei das Fahrzeugbewegungs-Steuerverfahren Folgendes umfasst:
Zuweisen einer Brems-/Antriebskraft zu dem Vorderrad (7FL, 7FR) und dem Hinterrad (7RL, 7RR) auf der Grundlage der für das Fahrzeug (50) erforderlichen Brems-/Antriebskraft, Zuweisen einer maximalen Rückgewinnungsbremskraft Rr_max, die durch den Elektromotor (13) erzeugt werden kann, zu den Vorderrädern (7FL, 7FR) oder den Hinterrädern (7RL, 7RR), wenn die für das Fahrzeug erforderliche Gesamtbremskraft Xreq größer als die oder gleich der maximalen RückgewinnungsbremskraftRr_max ist; und
Verringern der Brems-/Antriebskraft für das Rad, für das die Brems-/Antriebskraft durch den Elektromotor (13) erzeugt wird, in Reaktion auf eine Abnahme des Verhältnisses der Brems-/Antriebskraft zu einem Schlupfverhältnis des Vorderrads (7FL, 7FR) und/ oder des Hinterrads (7RL, 7RR).

13. Fahrzeugbewegungs-Steuerverfahren nach Anspruch 12, das ferner das Verringern der Brems-/Antriebskraft für das Vorderrad (7FL, 7FR) und/oder das Hinterrad (7RL, 7RR), für die die Brems-/Antriebskraft durch den Elektromotor (13) erzeugt wird, in Reaktion auf eine Erhöhung der chronologischen Änderungsrate der für das Fahrzeug (50) erforderlichen Brems-/Antriebskraft durch einen Fahrer und/oder eine separate Steuervorrichtung umfasst.

14. Fahrzeugbewegungs-Steuerverfahren nach Anspruch 12, das ferner das Verringern der Brems-/Antriebskraft für das Vorderrad (7FL, 7FR) und/oder das Hinterrad (7RL, 7RR), für das die Brems-/Antriebskraft durch den Elektromotor (13) erzeugt wird, in Reaktion auf eine Erhöhung der chronologischen Änderungsrate des Betrags der Betätigung eines Bremspedals (1b) oder eines Fahrpedals (1a) durch den Fahrer umfasst.

## Revendications

1. Appareil de commande de mouvement pour véhicule destiné à commander le mouvement d'un véhicule (50) équipé d'un appareil de freinage configuré pour générer une force de freinage dans au moins une roue parmi une roue avant (7FL, 7FR) et une roue arrière (7RL, 7RR) ; une source d'entraînement configurée pour générer une force d'entraînement dans au moins une roue parmi la roue avant (7FL, 7FR) et la roue arrière (7RL, 7RR) ; et un moteur électrique (13) configuré pour générer une force de freinage en régénération et une force d'entraînement électrique dans la roue avant ou la roue arrière, l'appareil de commande de mouvement pour véhicule comprenant :
une unité d'attribution de force de freinage/entraînement configurée pour attribuer une force de freinage/entraînement à la roue avant (7FL, 7FR) et la roue arrière (7RL, 7RR) sur la base de la force de freinage/entraînement requise pour le véhicule (50),
l'unité d'attribution de force de freinage/entraînement attribue une force de freinage en régénération maximum Rr_max capable d'être générée par le moteur électrique (13) vers les roues avant (7FL, 7FR) ou les roues arrière (7RL, 7RR) quand la force de freinage totale Xreq requise pour le véhicule est supérieure ou égale à la force de freinage en régénération maximum Rr_max ; et
l'unité d'attribution de force de freinage/entraînement diminue la force de freinage/entraînement pour la roue pour laquelle la force de freinage/entraînement est générée par le moteur électrique (13) en réponse à une diminution du rapport de la force de freinage/entraînement sur un rapport de glissement d'une roue au moins parmi la roue avant (7FL, 7FR) et la roue arrière (7RL, 7RR).

2. Appareil de commande de mouvement pour véhicule selon la revendication 1, dans lequel l'unité d'attribution de force de freinage/entraînement diminue la force de freinage/entraînement pour la roue parmi la roue avant et la roue arrière pour laquelle la force de freinage/entraînement est générée par le moteur électrique (13), en réponse à une augmentation de la vitesse de changement chronologique de la force de freinage/entraînement requise pour le véhicule (50) par un conducteur et/ou par un appareil de commande séparé.

3. Appareil de commande de mouvement pour véhicule selon la revendication 1 ou 2, dans lequel l'unité d'attribution de force de freinage/entraînement diminue la force de freinage/entraînement pour la roue parmi la roue avant (7FL, 7FR) et la roue arrière (7RL, 7RR) pour laquelle la force de freinage/entraînement est générée par le moteur électrique (13), en réponse à une augmentation du taux de changement chronologique dans la quantité d'actionnement d'une pédale de frein (1b) ou d'une pédale d'accélérateur (1a) par le conducteur.

4. Appareil de commande de mouvement pour véhicule selon la revendication 1, dans lequel :
le moteur électrique (13) est connecté à la roue arrière (7RL, 7RR) ; et
l'unité d'attribution de force de freinage/entraînement diminue la force de freinage pour la roue arrière (7RL, 7RR) en réponse à une diminution du rapport de la force de freinage sur le rapport de glissement d'une roue au moins parmi la roue avant (7FL, 7FR) et la roue arrière (7RL, 7RR).

5. Appareil de commande de mouvement pour véhicule selon la revendication 1, dans lequel l'unité d'attribution de force de freinage/entraînement diminue la force de freinage/entraînement pour la roue parmi la roue avant (7FL, 7FR) et la roue arrière (7RL, 7RR) pour laquelle la force de freinage/entraînement est généré par le moteur électrique (13), en réponse à une augmentation de l'accélération du véhicule ou d'une valeur prédite de l'accélération du véhicule (50).

6. Appareil de commande de mouvement pour véhicule selon la revendication 1, dans lequel l'unité d'attribution de force de freinage/entraînement diminue la force de freinage/entraînement pour la roue parmi la roue avant (7FL, 7FR) et la roue arrière (7RL, 7RR) pour laquelle la force de freinage/entraînement est générée par le moteur électrique (13), lorsque la détermination qu'un risque d'instabilité présente et/ou future pour le véhicule est élevé et/ou sera élevé.

7. Appareil de commande de mouvement pour véhicule selon la revendication 6, dans lequel l'unité d'attribution de force de freinage/entraînement détermine que le risque d'instabilité pour le véhicule est élevé ou sera élevé, sur la base d'informations externes au véhicule (50).

8. Appareil de commande de mouvement pour véhicule selon la revendication 1, dans lequel l'appareil de commande de mouvement pour véhicule fait que la force de freinage en régénération générée par le moteur électrique (13) est plus grande que la force de freinage générée par l'appareil de freinage lors de la diminution de la force de freinage/entraînement pour une roue parmi la roue avant (7FL, 7FR) et la roue arrière (7RL, 7RR) pour laquelle la force de freinage/entraînement est générée par le moteur électrique (13).

9. Appareil de commande de mouvement pour véhicule selon la revendication 1, dans lequel, quand le véhicule effectue un virage, l'appareil de commande de mouvement pour véhicule fait que la force de freinage pour une roue sur l'extérieur du virage est plus élevée que la force de freinage pour une roue sur l'intérieur du virage lors de la diminution de la force de freinage/entraînement pour la roue parmi la roue avant (7FL, 7FR) et la roue arrière (7RL, 7RR) pour laquelle 1a force de freinage/entraînement est générée par le moteur électrique (13).

10. Appareil de commande de mouvement pour véhicule selon la revendication 1, dans lequel l'unité d'attribution de force de freinage/entraînement diminue 1a force de freinage/entraînement générée par le moteur électrique (13) en réponse à une diminution du rapport de l'accélération du véhicule (50) sur le taux de glissement d'une roue au moins parmi la roue avant (7FL, 7FR) et la roue arrière (7RL, 7RR) au-dessous d'une valeur prédéterminée.

11. Appareil de commande de mouvement pour véhicule selon la revendication 1, dans lequel le rapport de glissement est calculé sur la base d'une vitesse de roue de chaque roue du véhicule (50) et de la vitesse du véhicule (50).

12. Procédé de commande de mouvement pour véhicule destiné à commander le mouvement d'un véhicule équipé d'un appareil de freinage configuré pour générer une force de freinage dans au moins une roue avant (7FL, 7FR) et une roue arrière (7RL, 7RR) ; une source d'entraînement configurée pour générer une force d'entraînement dans au moins une roue parmi la roue avant (7FL, 7FR) et la roue arrière (7RL, 7RR) ; et un moteur électrique (13) configuré pour générer une force de freinage en régénération et une force d'entraînement électrique dans la roue avant (7FL, 7FR) ou la roue arrière (7RL, 7RR),
le procédé de commande de mouvement pour véhicule comprenant les étapes consistant à :
attribuer une force de freinage/entraînement à la roue avant (7FL, 7FR) et la roue arrière (7RL, 7RR) sur la base de la force de freinage/entraînement requise pour le véhicule (50) consistant à attribuer une force de freinage en régénération maximum Rr_max qui peut être générée par le moteur électrique (13) vers les roues avant (7FL, 7FR) ou les roues arrière (7RL, 7RR) quand la force de freinage totale Xreq requise pour le véhicule est supérieure ou égale à la force de freinage en régénération maximum Rr_max ; et
diminuer la force de freinage/entraînement pour la roue pour laquelle la force de freinage/entraînement est générée par le moteur électrique (13) en réponse à une diminution du rapport de la force de freinage/entraînement sur un rapport de glissement de l'une au moins parmi la roue avant (7FL, 7FR) et la roue arrière (7RL, 7RR).

13. Procédé de commande de mouvement pour véhicule selon la revendication 12, comprenant en outre l'étape consistant à diminuer la force de freinage/entraînement pour la roue parmi la roue avant (7FL, 7FR) et la roue arrière (7RL, 7RR) pour laquelle la force de freinage/entraînement est générée par le moteur électrique (13), en réponse à une augmentation du taux de changement chronologique de la force de freinage/entraînement requise pour le véhicule par un conducteur et/ou par un appareil de commande séparé.

14. Procédé de commande de mouvement pour véhicule selon la revendication 12, comprenant en outre l'étape consistant à diminuer la force de freinage/entraînement pour la roue parmi la roue avant (7FL, 7FR) et la roue arrière (7RL, 7RR) pour laquelle la force de freinage/entraînement est générée par le moteur électrique (13), en réponse à une augmentation du taux de changement chronologique dans la quantité d'actionnement d'une pédale de frein (1b) ou une pédale d'accélérateur (1a) par le conducteur.
